# EUROPEAN PATENT SPECIFICATION

(11) **EP 4 176 692 B1**
(45) Date of publication and mention of the grant of the patent: **05.08.2026**
(21) Application number: 21831596.8
(22) Date of filing: 30.06.2021
(51) Int. Cl.: H05B 3/04, H05B 1/00, H05B 3/06, H05B 3/40, H05B 3/80

(54) **THERMAL IMMERSION CIRCULATOR DEVICE**
ZIRKULATORVORRICHTUNG FÜR THERMISCHE IMMERSION
DISPOSITIF DE CIRCULATEUR À IMMERSION THERMIQUE

(30) Priority: 01.07.2020 AU 2020902239
(43) Date of publication of application: 10.05.2023
(73) Proprietor: Breville Pty Limited, Alexandria, New South Wales 2015 (AU)
(72) Inventor: SHEN, William Yin Zhe, Alexandria, New South Wales 2015 (AU); NG, Eva, Alexandria, New South Wales 2015 (AU); ROSIAN, Marian Silviu, Alexandria, New South Wales 2015 (AU); CHING, Alfred Gar-Wo, Alexandria, New South Wales 2015 (AU); TANG, Han, Alexandria, New South Wales 2015 (AU); WAYLAND, Bryce James, Alexandria, New South Wales 2015 (AU)
(74) Representative: Grünecker Patent- und Rechtsanwälte PartG mbB
(86) International application number: PCT/AU2021/050699
(87) International publication number: WO 2022/000036

(56) References cited:
- WO-A1-2017/066692
- WO-A1-2019/046878
- WO-A1-2019/183682
- US-A1- 2004 234 256
- US-A1- 2019 124 722
- US-B1- 6 456 785

## Description

### Related Applications

The present application claims priority from Australian Provisional Patent Application No. 2020902239, filed 1 July 2020.

### Field

The present disclosure generally relates to an electrically powered thermal immersion circulator to heat various fluids. In particular, the present invention relates water ingress protection for an electrically powered thermal immersion circulator.

### Background

Thermal immersion circulators can be used to circulate and heat various fluids, such as to maintain a body of the fluid at an accurate and stable temperature. A thermal immersion circulator can include a pump or other mechanism to circulate the fluid, and a heating element to heat the fluid. Thermal immersion circulators have been used in applications such as scientific or other laboratories, and in kitchens, in particular, for sous vide cooking.

Parts around the heater of the thermal immersion circulator are exposed to temperatures in excess of 400°C during a thermal fuse abnormal test. Such abnormal testing can result in distortion of plastic parts of the thermal immersion circulator.

As shown in Fig. 21 of US20190124722A1, which discloses the preamble of independent claim 1, a thermal immersion circulator has two seals. One of the two seals is in direct contact with the heating element. Such an arrangement of the seal and other plastic couplings with respect to the heating element may result in damage of the seal and surrounding plastic couplings under abnormal testing. For example, water seals can fail after the thermal fuse abnormal test which can result in the thermal immersion circulator not meeting requirements of water immersion tests, such as IPX7.

Compliance with water immersion tests, such as IPX7, is preferred to ensure safe use of the thermal immersion circulator under different conditions.

A further example relating to thermal immersion circulators is disclosed in WO 2019/183682 A1.

### Summary of Invention

It is an object of the present invention to substantially overcome, or at least ameliorate, one or more of disadvantages outlined above, or provide a useful alternative. The scope of the invention is set out in independent claim 1 with further alternatives as set out in the dependent claims.

According to one aspect of the present disclosure, there is provided a thermal immersion circulator comprising: a housing defining a cavity; a heater comprising a heating element, wherein at least a portion of the heating element is located within the cavity of the housing; a coupling assembly securing the heater within the housing; and a seal isolating the coupling assembly from direct contact with the heater.

In some implementations, the heater may have a side surface, wherein the coupling assembly comprises a main body dimensioned to engage with the housing and the side surface of the heater, the main body extending between the side surface and the housing. The seal may be secured on the main body of the coupling assembly with respect to the side surface and extend around the main body into a space between the housing and the side surface. The seal may comprise at least one laterally extending protrusion extending outwardly and in contact with the housing and the side surface. The seal may be removably coupled to the main body.

The main body may comprise a reinforcement element extending away from the main body substantially along the side surface into the space between the housing and the side surface, the reinforcement element being positioned substantially within the seal. The seal may comprise an outer sealing portion, an inner sealing portion and an upper sealing portion together forming a reinforcement cavity dimensioned to receive the reinforcement element. The seal may be secured on and over the reinforcement element. The outer sealing portion may seal the coupling assembly against the housing and the heater to substantially prevent water ingress into the space between the housing and the side surface. The inner sealing portion may isolate the heater from the main body of the coupling assembly.

The side surface may comprise a lateral protrusion extending into the space between the housing and the side surface, an underside of the lateral protrusion being in contact with the upper sealing portion to secure the seal on and over the reinforcement element, wherein the upper sealing portion isolates the main body from the side surface. The inner sealing portion and the outer sealing portion may be double-ribbed.

The main body may comprise at least one protrusion located on an outer peripheral surface of the main body to be coupled to at least one channel located on an inner surface of the housing to locate the coupling assembly within the housing.

According to another aspect of the present disclosure, there is provided a thermal immersion circulator, comprising: a heater having a side wall; a housing sized and dimensioned to receive at least a portion of the heater; a coupling assembly coupled to the housing, the coupling assembly comprising: a main body dimensioned to engage with the housing and the side wall of the heater to secure the heater with respect to the housing, the main body extending between the side wall and the housing thereby forming a cavity between the side wall and the housing and a reinforcement element; and a seal secured on the main body of the coupling assembly with respect to the side wall and the housing and extending around the main body and into the cavity, the seal comprising at least one laterally extending protrusion extending outwardly and in contact with the housing and the side wall; wherein the reinforcement element is positioned substantially within the seal to reinforce the seal.

According to a further aspect of the present disclosure there is provided a heater for a thermal immersion circulator, the heater comprising: a tubular side wall having longitudinal axis, a fluid inlet in communication with a fluid outlet, and a fluid heating portion located therebetween; at least one seal located adjacent the outlet; and a heating element physically coupled to the tubular side wall and wrapped at least partially about the fluid heating portion, the heating element comprising a plurality of resistive bands arranged on the tubular side wall, wherein a first portion of a resistive band of the plurality of resistive bands adjacent the fluid outlet is longitudinally spaced further from the fluid outlet compared to a longitudinal spacing between the outlet and an opposing second portion of the resistive band arranged on the side wall so as to reduce transfer of heat generated by the resistive band to the seal whilst heating the fluid substantially along a longitudinal length of the fluid heating portion.

Other aspects are also disclosed.

### Brief Description of Drawings

In the drawings, identical reference numbers identify similar elements or acts. The sizes and relative positions of elements in the drawings are not necessarily drawn to scale. For example, the shapes of various elements and angles are not necessarily drawn to scale, and some of these elements may be arbitrarily enlarged and positioned to improve drawing legibility. Further, the particular shapes of the elements as drawn are not necessarily intended to convey any information regarding the actual shape of the particular elements, and may have been solely selected for ease of recognition in the drawings.
FIG. 1 illustrates a thermal immersion circulator according to at least one illustrated embodiment.
FIG. 2 is a cross-sectional view of the thermal immersion circulator as shown in FIG. 1, according to at least one illustrated embodiment.
FIG. 3 is an enlarged cross-sectional view of a cord support of the thermal immersion circulator as shown in FIG. 2, according to at least one illustrated embodiment.
FIG. 4 is a cross-sectional view of a housing of the thermal immersion circulator showing a cord supported by the cord support, according to at least one illustrated embodiment.
FIG. 5 is an exploded view of the thermal immersion circulator, according to at least one illustrated embodiment.
FIG. 6A is a perspective view of a heater coupled to a motor of the thermal immersion circulator, according to at least one illustrated embodiment.
FIG. 6B is an exploded view of the heater and the motor shown in FIG. 6A, according to at least one illustrated embodiment.
FIG. 7 is an enlarged cross-sectional view of a motor mount of the thermal immersion circulator, according to at least one illustrated embodiment.
FIG. 8 is a perspective view of a three-dimensional rendering of internal electronics and a motor seal of the thermal immersion circulator, according to at least one illustrated embodiment.
FIG. 9A is a perspective view of the heater of the thermal immersion circulator showing a flexible circuit wrapped around a side wall, according to at least one illustrated embodiment.
FIG. 9B is a front view of the heater of Fig. 9A showing the flexible circuit spaced from a fluid outlet opening, according to at least one illustrated embodiment.
FIG. 9C is a side view of the heater of FIG. 9A, showing a flange and a plurality of resistive bands of the flexible circuit spaced apart from a fluid bath temperature sensor located on the flange, according to at least one illustrated embodiment.
FIG. 10 is a plan view of the flexible circuit board shown in FIGs. 9A to 9C, according to at least one illustrated embodiment.
FIG. 11 is a perspective view of the heater showing resistive bands arranged in columns and spaced apart from the fluid bath temperature sensor, according to at least one illustrated embodiment.
FIG. 12 is an enlarged cross-sectional view of a lower inlet assembly and a coupling assembly securing the heater within the housing of the thermal immersion circulator, according to at least one illustrated embodiment.
FIG. 13 is an exploded view of the lower inlet assembly and the coupling assembly of FIG. 12, according to at least one illustrated embodiment.
FIG. 14A is a top perspective view of a seal shown in Fig. 13, according to at least one illustrated embodiment.
FIG. 14B is a bottom perspective view of the seal shown in Fig. 13, according to at least one illustrated embodiment.
FIG. 15 is a perspective view of the coupling assembly of Fig. 12 having the seal mounted thereon, according to at least one illustrated embodiment.
FIG. 16 is a perspective view of assembled internal components of the thermal immersion circulator, according to at least one illustrated embodiment.

### Description of Embodiments

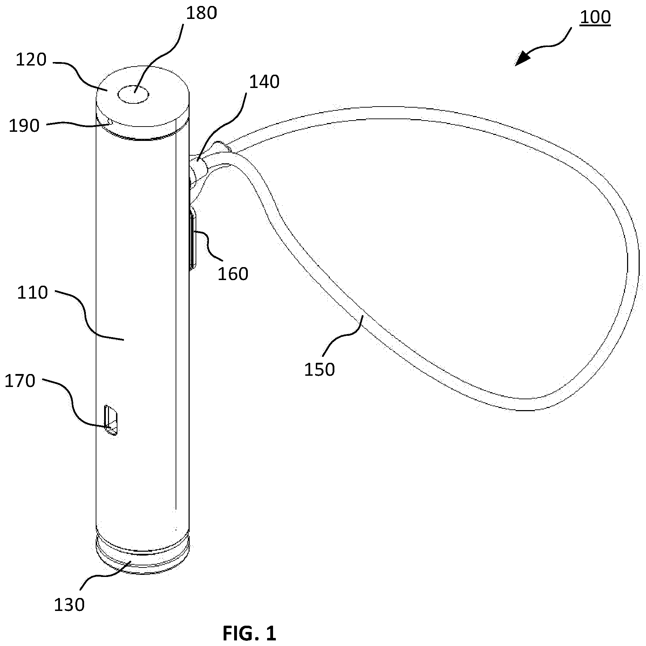

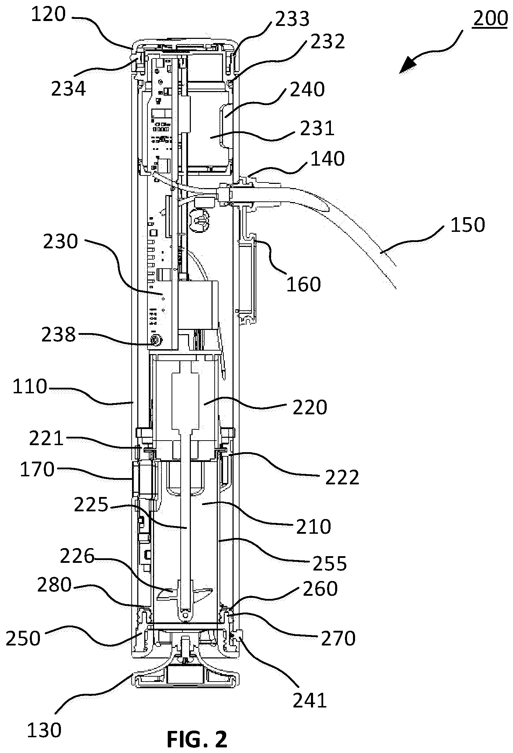

FIG. 1 shows a thermal immersion circulator **100.** In one implementation, the thermal immersion circulator **100** comprises a housing, for example a waterproof housing **110,** defining a cavity, a heater, for example a heater **210** shown in Fig. 2, a coupling assembly, for example a coupling assembly **250** shown in Fig. 2, securing the heater within the housing, anda seal, for example a seal **260,** isolating the coupling assembly from direct contact with the heater. The heater may comprise a heating element, wherein at least a portion of the heating element is located within the cavity of the housing.

The thermal immersion circulator **100** can be positioned in a container, vessel, or pot (not shown). The container can hold a body of water or another fluid for cooking food, and the thermal immersion circulator **100** can be used to heat up, maintain a temperature of, or circulate the fluid within the container. The thermal immersion circulator **100** can be used for sous vide cooking. The thermal immersion circulator **100** can be positioned to stand upright in the container on a bottom end of the thermal immersion circulator **100,** or can be clipped, clamped, or otherwise attached onto the rim or side of the container, as desired based on the size of the container, the depth of the fluid in the container, etc.

The waterproof housing **110** protects circuitry therein so the thermal immersion circulator **100** can be safely submerged, at least partially, in water or another fluid. The thermal immersion circulator **100** can also include a top cap **120,** a lower inlet assembly **130,** a cable mount assembly **140** for a power cord **150** and a cord support **160.** The thermal immersion circulator **100** can also include a display, and relevant UI, etc. (not shown).

The lower inlet assembly **130** has a flat bottom surface on which the thermal immersion circulator **100** can stand. In some implementations, the flat bottom surface can include a magnet to help maintain the position of the thermal immersion circulator **100** within the container holding a body of water or another fluid for cooking food. The lower inlet assembly **130** can have a peripheral, radial opening through which a fluid can be drawn into an interior of the thermal immersion circulator **100.**

The housing **110** may have a fluid outlet opening **170** to expel the fluid drawn into the interior of the thermal immersion circulator **100.** Alternatively, the fluid can be expelled from the opening of the lower inlet assembly **130** of the thermal immersion circulator **100.** The opening **170** can be formed in a side wall of the housing **110,** through which a fluid can be drawn into, or through which a fluid can be expelled from, the interior of the thermal immersion circulator **100.**

The top cap **120** is mounted to the housing **110** of the thermal immersion circulator **100.** The top cap comprises a button **180** to turn on/off thermal immersion circulator **100** and a light indicator **190** to indicate whether the thermal immersion circulator **100** is turned on or off.

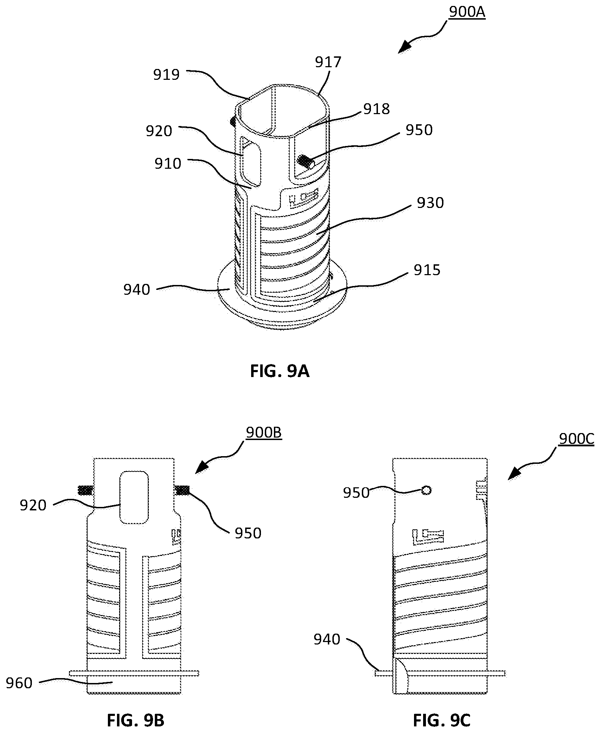

Fig. 2 shows the cross-sectional view **200** of the thermal immersion circulator **100** to illustrate various internal components of the thermal immersion circulator **100** according to some implementations of the present disclosure. The thermal immersion circulator **100** includes the heater **210.** The heater **210** typically comprises one or more heating elements. In some implementations the heater **210** comprises one heating element in a form of a thermal coil. In alternative implementations, the heater **210** comprises a plurality of heating elements in a form resistive bands of a flexible printed circuit. The heater **210** is described in greater detail below with references to Figs. 9 to 11.

A bottom end of the heater **210** is coupled to the lower inlet assembly **130** using the coupling assembly **250** so that an internal conduit or passage through the heater **210** is in fluid communication with the peripheral opening of the inlet assembly **130.** The coupling assembly **250** is locked within the housing using an annular snap fit. A side surface **255** of the heater **210** can be coupled to the opening **170** so that the internal conduit through the heater **210** is in fluid communication with the opening **170,** such as through an opening or slot in a side of the heater **210** and a passageway through a spacer, as described in greater detail below.

The coupling assembly **250** comprises a main body and a seal **260.** The main body of the coupling assembly **250** is dimensioned to engage with the housing **110** and the side wall **255** of the heater **210** to secure the heater **210** with respect to the housing **110.** The main body laterally extends between the side wall **255** and the housing **110** thereby forming a cavity between the side wall **255** and the housing **110.** The seal **260** is secured on the main body with respect to the side wall **255** and the housing **110** and extends around the main body and into the formed cavity. The seal **260** can comprise at least one laterally extending protrusion extending outwardly and in contact with the housing **110** and the side wall **255.**

The coupling assembly **250** can comprise a reinforcement element **270** which locates and ensures balanced compression of the seal **260** against the housing **110** and heater **210** to prevent water ingress. This arrangement of the reinforcement element with the seal **260** isolates the coupling assembly **250** from heater **210** ensuring the seal **260** compression is maintained even under abnormal heating conditions and thereby wholly or substantially preventing water ingress into the cavity within the housing **110.** In this context, 'substantially' generally refers to situations where a small amount of fluid may get into the cavity, for example, between the seal **260** and the reinforcement element **270** or between the ribs of the seal, however, such a small amount of fluid is not considered to be in harmful quantities and does not affect electronic components of the thermal immersion circulator so that the thermal immersion circulator still meets the requirements of water immersion tests, such as IPX7. Specifically, IPX7 defines testing conditions, such as fluid temperature, fluid salinity, use of chemicals, test duration of 30 minutes and a depth of less than one meter.

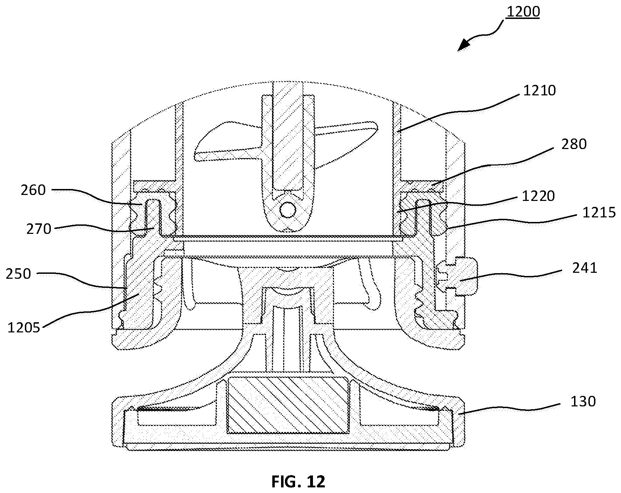

The reinforcement element, for example, can be integrally formed with the main body of the coupling assembly **250,** such as a protrusion **270** extending vertically along the side wall (or side surface in case of a thermal coil) of the heater **210** into the cavity formed between the housing **110** and the side wall of the heater **210.** Alternatively, the reinforcement element may be a separate element mounted within the seal **260.** The seal **260** is dimensioned to be secured with respect to the main body of the coupling assembly **250** and to receive the reinforcement element **270.** The seal **260** can be secured using different means, such as adhesive. The seal **260** is preferably removably mounted on the main body of the coupling assembly **250** and held is place using, for example, a lateral protrusion **280** extending outwardly from the side wall **255** of the heater **210.** The seal **260** preferably tightly follows the contour of the side wall **255** and the housing **110.** The seal **260** can be a radial seal. The coupling assembly **250** is described in further detail below with references to Figs. 12 to 15.

The thermal immersion circulator **100** also includes a motor **220** coupled to the heater **210,** a printed circuit board **230** controlling the heater **210** and the motor **220.** The printed circuit board **230** can receive power from the cord **150** to control operation of the heater **210** and the motor **220.**

The printed circuit board **230** is mounted within an electronics module mounting frame **231** as discussed below with references to Fig. 19. The PCB is also coupled to a motor frame using a nut **238.** The motor **220** is discussed in detail below.

The electronics housing module comprises the top cap assembly **120** and the electronics module mounting frame **231.** The mounting frame **231** comprises one or more seals 232, a lip **233** for securing the top cap assembly **120** on the housing **110,** a light guide **234** and a communication module **240** to control the printed circuit board assembly **230.** The communication module **240** can provide Wi-Fi or Bluetooth connection to control the PCBA **230.**

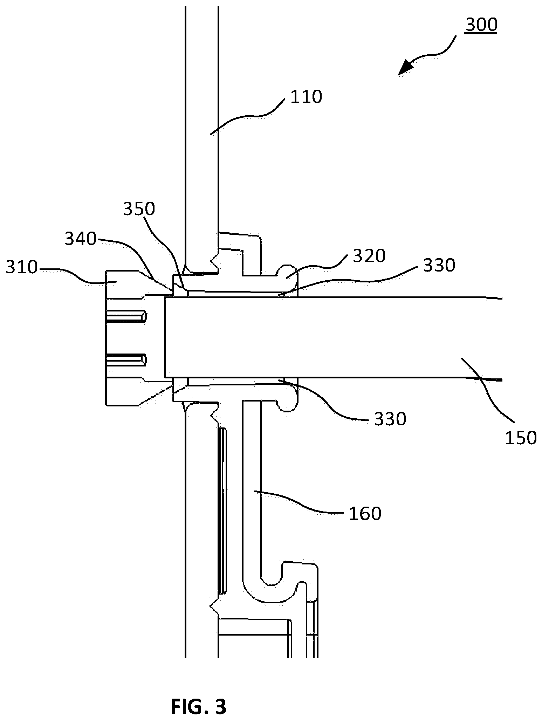

Additionally, the thermal immersion circulator **100** can also include a power cord **150** which can be used to plug the thermal immersion circulator **100** into a standard wall socket to draw power from a power grid. The power cord **150** can be mounted using the cable mount assembly **140** as discussed below with references to Fig. 3.

The motor **220** can be mounted to the top of the heater **210** using the front motor mount **221** and the rear motor mount **222.** The front motor mount **221** and the rear motor mount **222** stabilise the motor **220** with respect to the rest of the thermal immersion circulator **100.** In alternative embodiments, the motor **220** can be mounted to the top of the heater **210** in any suitable way, such as by any suitable mechanical fastener (e.g., a screw, bolt, nail, etc.) or any suitable adhesive (e.g., a glue, epoxy, etc.), or a friction or interference fit. The motor **220** can comprise a quiet 12V, 24V, or any other suitable voltage DC brushless, DC brush motor, switched reluctance motor, universal motor, or AC inductive motor. Various sealing elements, such as a compression surface gasket, can be used to seal the motor off from the fluid flowing through the heater **210,** such as by preventing the fluid from escaping through mounting holes.

A shaft **225** can carry torque from the motor **220** to the impeller **226** to drive rotation of the impeller **226** and thus the flow of a fluid such as water through the interior of the heater **210.** The impeller **226** can be mounted at or near the bottom of the main body of the heater **210,** or closer to the bottom end of the main body of the heater **210** than to the fluid outlet opening **170,** such that the heater **210** can be used in bodies of fluid having low fluid levels. The impeller **226** is installed within the interior of the heater **210.** The impeller **226** can be a jet drive impeller. The impeller **226** can, for example, have two, three, or any other suitable number of blades and a central opening sized to receive the shaft **225** extending from the motor **220.**

In one alternative implementation, the shaft **225** is not directly physically coupled to the motor **220.** In such an alternative implementation, a first magnetic element is directly physically coupled to the motor **220,** a second magnetic element is directly physically coupled to the shaft **225,** and the first and second magnetic elements are magnetically coupled to one another. Thus, the motor **220** can be actuated to directly drive rotation of the first magnetic element, which can induce rotation of the second magnetic element via the magnetic coupling, and the rotation of the second magnetic element can induce rotation of the shaft **225** and the impeller **226.** In such an alternative implementation, the shaft **225** and the impeller **226** are magnetically coupled to the motor **220.** In another alternative implementation, the shaft **225** can be coupled to the motor **220,** either physically or magnetically, via a gearbox or other intermediary components.

In use, the motor **220** can be turned on to drive the impeller **226,** and can be used to control a rate of rotation of the impeller **226** to control the flow rate of a fluid such as water through the heater **210.** In some implementations, and in particular when the heater **210** is being used to heat a fluid, the motor **220** can be used to drive the impeller **226** to rotate in a first direction, to cause fluid to flow upward, i.e., in through the opening at the bottom of the heater **210,** through the interior of the main body of the heater **210,** out of the main body through an opening in the tubular side wall **255** of the main body of the heater **210,** and out of the housing **110** through the opening **170** in the side wall of housing **110.**

By mounting the heater **210** in a thermal immersion circulator **100** and positioning the thermal immersion circulator in a fluid so that the bottom of the heater **210** is exposed to the fluid, the fluid (e.g., water) is allowed to be pulled into the heater **210** by the impeller **226** from the very bottom of the heater **210.** Further, the motor **220** can drive the impeller **226** to rotate fast enough to draw water up through the interior of the main body of the heater **210** even when the water within the main body is exposed to atmospheric air, such as when the heater **210** is used to heat water having a very low water level (e.g., a water level below the bottom of the opening **170.** As an example, a thermal immersion circulator **100** including the heater **210** can be used to heat a fluid having a depth of no less than 1.5 inches.

A fluid at a higher temperature rises above the same fluid at a lower temperature, so drawing the fluid into the heater **210** from the very bottom of the thermal immersion circulator **100** allows relatively cool fluid to be drawn into the heater **210,** allowing more effective and efficient heating of the fluid. Further, drawing water in at the bottom of the heater **210** and upward through the main body helps to purge any air bubbles within the heater **210,** and can help to reduce the level of noise generated by a thermal immersion circulator including the heater **210,** such as by reducing cavitation within the heater **210.** Further still, positioning the fluid outlet for the fluid flow in the side of the heater **210** rather than at the top end, and in the side of the housing **110,** allows a thermal immersion circulator including the heater **210** to be more compact, as the motor **220** and other electric components of the thermal immersion circulator (e.g., a power source such as a battery or an electric cord for plugging into a wall outlet) can be mounted on top of the heater **210** within the housing **110.**

FIG. 3 shows an enlarged cross-sectional view **300** of the cable mount assembly **140** for the power cord **150** and the cord support **160.** The cable mount assembly **140** comprises a "cup and cone" arrangement comprising a connection element **310** coupled to a boss **320.** The boss **320** is configured to receive the power cord **150.** The power cord **150** is adhered to an internal surface of the boss **320** by injecting any suitable adhesive, such as glue, into the gap **330** to hold the power cord **150** in place.

The connection element **310** can be coupled to the boss **320** using a first tapered portion **340** dimensioned to engage a second tapered portion **350** of the boss **320** in mating engagement. The first tapered portion **340** is adapted to a) hold the cord 150 in place and b) cooperate with the second tapered portion **350** of the boss **320** during assembly to prevent the adhesive from flowing inside the electronics module. The first taper portion **340** cooperates with the second taper portion **350.** The first taper portion **340** together with the second taper portion **350** forms a taper fit. The taper fit allows the first taper portion **340** (cone shape) to be inserted to the second taper portion **350** (cup shape) substantially without leaving a gap. Accordingly, the adhesive injected into the gap **330** forms a seal around the power cord **150.**

As such, even if the gap **330** around the power cord 150 may be large, the liquid adhesive would still be able to form a seal due to the tight taper fit facilitated by the first taper portion **340** (cone shape) receiving the second taper portion **350** (cup shape). The tight taper fit, when assembled, effectively creates a landing zone for the liquid adhesive to bond with. In other words, a sealing surface area between the inner surface of the boss **320** and the power cord **150** is increased thereby preventing the adhesive leaking through and not forming a seal.

The above described sealing interface allows the power cord **150** to freely slide through during assembly. Additionally, the adhesive can be applied during the assembly to fill the sealing interface to seal around the power cord **150** to prevent water ingress. As such, the described configuration of the cable mount assembly **140** facilitates a loose interface between the power cord **150** and the cable mount assembly **140** during the assembly of the thermal immersion circulator **100** while preventing water ingress during use of the thermal immersion circulator **100.**

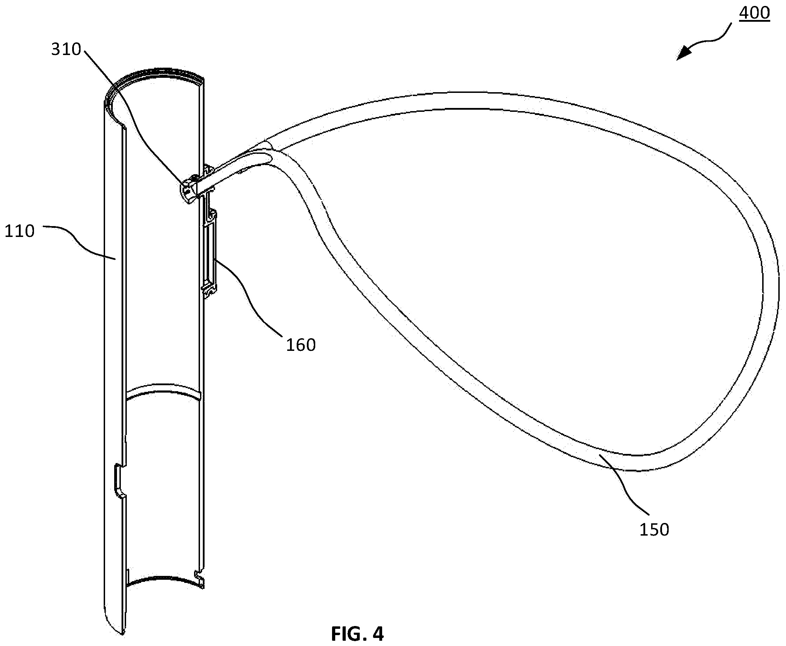

FIG. 4 shows a cross-sectional perspective view **400** of the housing **110** of the thermal immersion circulator **100** showing the cord **150** mounted using the connection element **310** and supported by the cord support **160.**

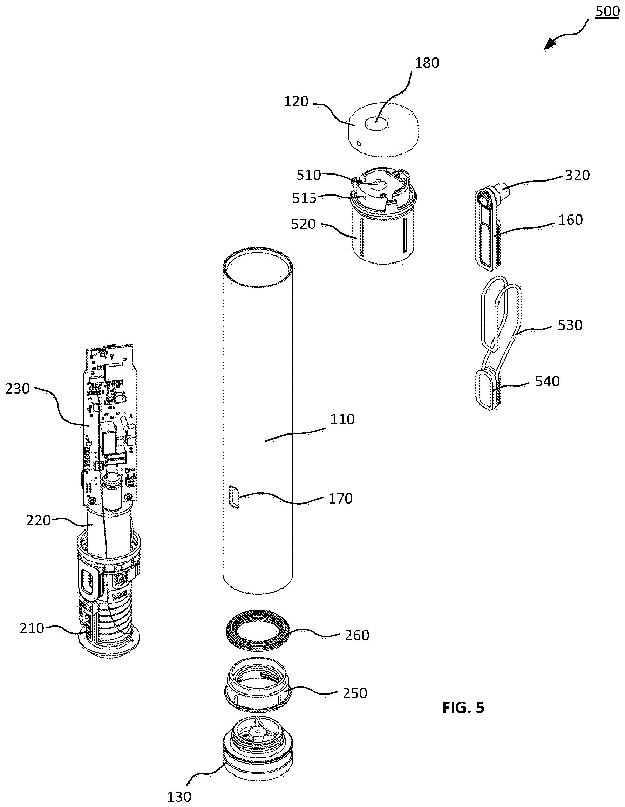

FIG. 5 shows the thermal immersion circulator **100** in an exploded view, and illustrates methods of assembling the thermal immersion circulator **100.** For example, a method of assembling the thermal immersion circulator **100** can include, possibly, but not necessarily in the following order: coupling the heater **210** with the motor **220,** coupling the motor with the electronics module **230,** inserting the heater **210** coupled to the motor **220** and the electronics module including the electronics module housing into the housing **110** such that the fluid outlet opening **170** is aligned with an opening in the side wall **255** of the heater **210,** then securing the heater **210** within the housing **110** using the coupling assembly **250** having a main body and a seal **260** mounted on the main body, then coupling the power cord **150** to the electronics module through the housing **110,** then connecting and securing the top cap assembly **120** to the housing **110,** then attaching the lower inlet assembly **130** to the housing **110,** heater **210,** and the coupling assembly **250,** and then attaching the clip **530** having a molded pad **540** to the housing **110.** The molded pad bears against a side of the container such that the side of the container can be clamped between the housing **110** and the pad **540** by a biasing action of the clip **530.**

The clip **530** can include a wire (which can be stainless steel or any other suitable material) having a shape to mate with a groove in the cord support **160** to hold the clip **530** to the support **160** by friction, such as in an interference fit. Thus, the clip **530** can be easily removed from the support **160** and replaced with another clip, if desired, to suit dimensions of the container used for heating the fluid.

The method can further include coupling or joining the components inserted into the housing **110** to the housing **110** in a waterproof fashion, such as by ultrasonically welding, applying sealants or adhesives, or the use of mechanical seals. The components which can be coupled to or joined together with the housing **110** in a waterproof fashion may include the coupling assembly **250,** the mounting frame **231,** the bumper **241,** the clip **530** and the power cord **150** and optionally the propeller to drive shaft.

For example, during first-time assembly or during inspection and/or servicing of the thermal immersion circulator **100,** the radial seal **260** can be mounted onto the main body of the coupling assembly **250** to thereby isolate the coupling assembly **250** from direct contact with heating elements of the heater **210.** The radial seal **260** may have two inner protrusions and two outer protrusions to position and secure the radial seal **260** against the housing **110** and the heater **210.** The reinforcement element **270** can extend from the main body of the coupling assembly **250,** and/or optionally be introduced into the radial seal **260** between the inner and outer protrusions to sealingly isolate the coupling assembly **250** from the heater **210.**

The method can further include coupling the top cap assembly **120** to the top ends of a mounting frame 231 also shown as **520** and the housing **110.** The method can further include coupling the propeller **226** to a drive shaft **225** coupled to the motor **220** and inserting the housing bumper **241** into a slot in the housing **110.** The method can further include coupling the inlet assembly **130** to the bottom end of the housing **110.** The method can further include attaching the clip **530** to the power cable **150.**

The electronics module housing comprises the top cap assembly **120** and the mounting frame **520.** The top cap assembly **120** comprises a first pressure sensitive adhesive sticker **510,** a second pressure sensitive adhesive sticker **515** aligned with an opening in the top cap assembly **120,** and a dome button **180.**

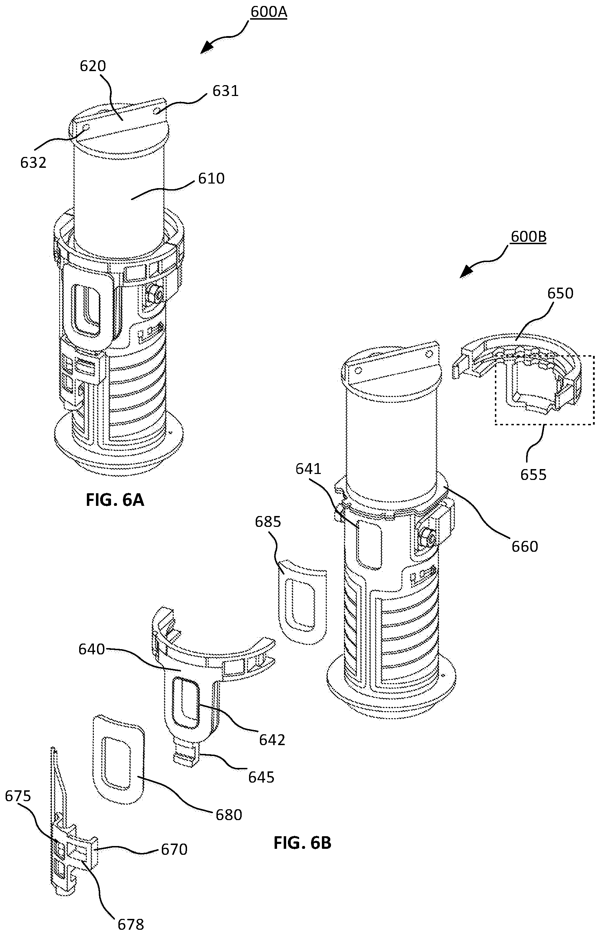

FIG. 6A is a perspective view **600A** of an assembled configuration of the heater **210** coupled to the motor **220** of the thermal immersion circulator **100.** The motor **220** is mounted on the heater **210** and comprises a motor housing **610.** The motor housing **610** has a side wall, which can be substantially aligned with the side wall **255** of the heater **210,** and a top end portion. The top end portion of the motor **220** comprises a vertically extending tab for securing the PCB **230** with respect to the motor housing **610.** In one embodiment, the vertically extending tab **620** can have at least one opening to receive a screw or any other fastener for fastening the PCB **230** to the motor housing **610.** As shown in Fig. 6A, the vertically extending tab, for example, can comprise two openings **631** and **632** adapted to receive screws or any other fastener for fastening the PCB **230** to the motor housing **610.**

The printed circuit board **230** and electronics can be coupled to the ridge **620,** such as with screws **238.** The motor housing **610** can provide a heat path to transfer heat from above the motor **220** to below the motor **220.** For example, heat from the printed circuit board **230** and electronics can flow through the ridge **620,** through the top plate, through the outer shell, through the bottom plate, and into the fluid flowing through the heater **210** coupled to the bottom plate of the motor **220.** To provide efficient flow paths, the top plate and the bottom plate of the motor **220** can comprise heat conductive materials such as zinc, copper, or aluminum, and the outer shell can comprise heat conductive materials such as zinc, copper, or aluminum. As two specific examples, the outer shell of the motor **220** can include a 1.65 mm thick copper shell or a 3.00 mm think aluminum shell.

FIG. 6B is an exploded view **600B** of the heater **210** and the motor **220** shown in FIG. 6A. The motor housing **610** of the motor **220** is coupled with the heater **210.** The motor mounts **640** and **650** are configured to stabilise the heater **210** and to maintain concentricity of the overall heater-motor assembly.

The motor mounts **640** and **650** can be positioned above the fluid outlet opening **170.** The motor mounts **640** and **650** can be similar to the front motor mount **221** and the rear motor mount **222.** Additionally, the motor mount **640** comprises a fluid outlet portion extending around an opening **641** in the side wall **255** of the heater **220.** The fluid outlet opening **641** is aligned with the fluid outlet opening **170** to enable fluid communication between the opening **641** and the fluid outlet opening **170,** i.e. between fluid being heated and the heater **210.**

The fluid outlet portion comprises an opening **642** substantially coinciding with the fluid outlet opening **641** of the side wall **255** of the heater **210** and a lip **645** for coupling with a thermal fuse holder **670.** The thermal fuse holder **670** comprises an opening **675** dimensioned to receive a thermal fuse of the heater **210** and an opening **678** dimensioned to receive the lip **645.** The thermal fuse holder **670** is coupled with the front motor mount **640** by locking the opening **687** with respect to the lip **645** in a locking engagement. For example, the lip **645** can have a protrusion so that when the thermal fuse holder **670** is being coupled to the front motor mount **640,** the protrusion engages the opening **678** thus securing the thermal fuse holder **670** with respect to the front motor mount **640** in the locking engagement.

The thermal immersion circulator **100** also comprises a first foam seal **680** and a second foam seal **685** to substantially prevent water ingress into the electronics module. The fluid outlet portion and the foam seals **680** and **685** together forming a spacer having a passageway positioned in between the openings **170** and **641.** The passageway has a shape matching that of the openings **170** and **641,** such that the openings **170** and **641** and the passageway can form a single channel that can carry water or other fluids from within the interior of the heater **210** out of and away from the heater **210** and the electrical components of the heater **210.**

The front motor mount **640** is effectively sandwiched between the foam seals **680** and **685.** The motor mount **640,** the fluid outlet opening **170,** the foams seals **680** and **685,** and the opening **641** are configured to form a passageway for fluid to and from the heater **210,** in particular, for heated fluid to be expelled from the inside of the heater **210.** The rear motor mount **650** comprises the extended portion **655** counterbalancing the reactive forces of the foam seals **680** and **685** to substantially prevent dislocation of the motor **220** with respect to the heater **210** and/or the housing **110** even during abnormal heating condition.

The motor mounts **640** and **650** and the coupling assembly **250** are made from a higher heat reflection material, such as Polyetherimide (PEI) plastic, to reduce warpage of the surfaces of the seals, such as foam seals **680** and **685** and radial seal **260.**

The motor mounts **640** and **650** are configured to receive and engage with a bottom plate **660** of the motor housing **610.** For example, each of the motor mounts **640** and **650** can have a slot for receiving and securing the bottom plate **660** of the motor housing **610** with respect to the rest of the thermal immersion circulator **100.**

The rear motor mount **650** comprises an extended portion **655** extending in the same direction as the fluid outlet portion. The extended portion **655** stabilises the motor **220** and the heater **210** and also counteracts potential misalignment of the motor **220** and the heater **210** caused by the foam seals **680** and **685,** which squeeze the heater **210** and the motor **220** to provide sealing. The above discussed counteracting mechanism of the extended portion **655** substantially prevents water ingress to the electronics module, such as PCBA **230.** The extended portion **655** of the rear motor mount **650** effectively balances the reaction forces caused by the foam seals **680** and **685** to centralise the heater **210** and the motor **220.** The discussed arrangement of the heater **210,** motor **220** and the motor mounts **640** and **650** substantially prevents water ingress into the electronics module **230** particularly under abnormal heating conditions.

For the purposes of this disclosure, the abnormal heating conditions refer to an out of control heating event or thermal fuse abnormal testing, such as IPX7 testing. When the out of control heating event occurs, parts around the heater **210** are exposed to temperatures in excess of 400°C during a thermal fuse abnormal test. The above described arrangement the front motor mount **640** and the rear motor mount **650** substantially prevent distortion of plastic parts such that foam seals **680** and **685** and balances the reaction forces caused by the foam seals **680** and **685** to centralise the heater **210** and the motor **220** to enable the thermal immersion circulator **100** to meet IPX7 requirements and thus maintaining IPX7 protection.

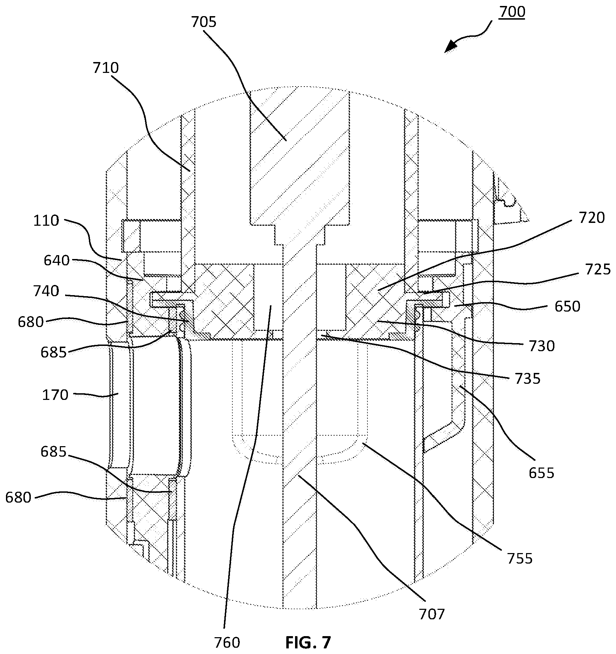

FIG. 7 shows and enlarged cross-sectional view **700** of the motor mount of the thermal immersion circulator **100.**

The motor **220** comprises a motor engine **705,** a shaft **707** mounted within the motor engine **705** and driven by the motor **220** to carry torque from the motor **220** to the impeller **226,** an outer cylindrical shell **710** surrounding the motor engine **705,** and a bottom plate **720** isolating the motor engine **705** from the heater **210.** The outer cylindrical shell **710** together with the bottom plate **720** form a motor housing. The cylindrical shell **710** may have a side flat wall **755.**

Mechanical or electrical components of the motor **220** can be housed within the shell **710** between a top plate shown in Fig. 6A and the bottom plate **720,** and can be used to turn a drive shaft **707,** having a diameter of about 4 mm, such as at rates of at least 1800 rpm, with 2600 rpm being a suitable example.

The bottom plate **720** is attached at the bottom of the outer cylindrical shell **710** adjacent to the heater **210** to substantially enclose the motor engine **705** and prevent water ingress from inside the heater **210.** The bottom plate **720** is dimensioned to tightly fit within the outer cylindrical shell **710.** In alternative configurations, the bottom plate can be integrally formed with the outer cylindrical shell **710.** The bottom plate **720** comprises a lateral protrusion, such as a flange **725,** securing the bottom plate **720** with respect to the outer cylindrical shell **710.** The flange **725** extends outwardly around the outer cylindrical shell **710** as shown in Fig. 6B to secure the motor mounts **640** and **650** within the housing **110** and with respect to the heater **210.**

The bottom plate **720** also comprises an extended portion extending vertically away from the flange **725,** such as a boss **730,** a seal **735** sealing an opening in the bottom plate **720** and the boss **730** to allow movement of the shaft **707** while preventing water ingress from the inside of the heater **210.** The boss **730** is dimensioned to fit within an internal surface of the heater **210.** The boss **730** can have a cross sectional shape matching the cross-sectional shape of the interior of the top portion of the heater **210,** so that the boss **730** can snugly mate with the interior of the top portion of heater **210** while the flange **725** engages the top of the heater **210.**

Additionally, the bottom plate **720** comprises a seal **740** positioned to extend around the boss **730** where the boss **730** meets the flange **725.** The seal **740** seals around the peripheral of the boss **730** and underneath the flange **725** to prevent water ingress from inside of the heater **210** and through coupling of the internal wall of the heater **210** with the motor **220.** The seal **740** is preferably a double-ribbed seal. The bottom plate **720** also comprises an opening **760.**

The bottom plate **720** can separate the hollow interior of the heater **210** from an interior of the thermal immersion circulator **100** above the heater **210.** The peripheral surface of the hole **760** can be smooth, and the hole **760** can be configured to allow a rotor or drive shaft **707** to pass from the exterior, through the bottom plate **720,** and into the interior of the heater **210.**

The front motor mount **640** and **650** comprise a slot for receiving the flange **725** and the seal **740** extending underneath the flange **725** to secure the motor mounts **640** and **650** in place with respect to the outer cylindrical shell **710.**

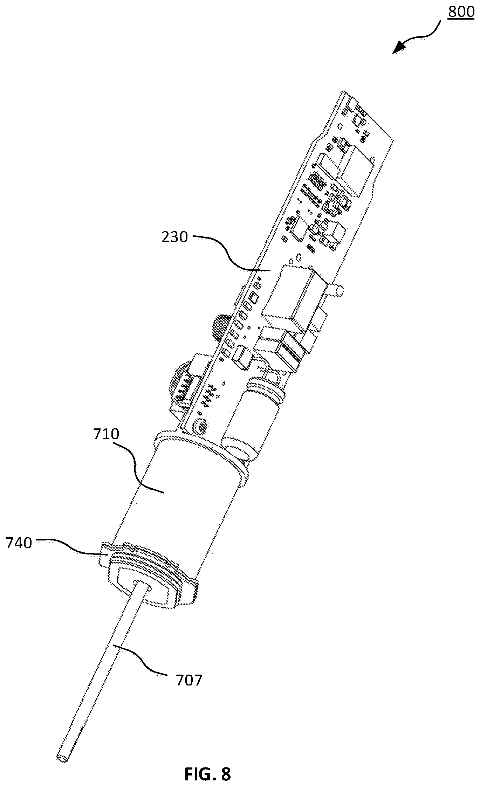

FIG. 8 shows a three-dimensional rendering of internal electronics and the motor **220** of the thermal immersion circulator **100.** As shown in FIG. 8, the double-ribbed reinforced seal **740** substantially following the contour of the flange **725** to provide a tight fit between the side wall **255** of the heater **210** and the bottom plate **720.** It is noted that use the double-ribbed reinforced seal **740** between the motor housing and the heater **210** provides seal redundancy and further prevents water ingress into internal electronics module. Fig. 8 also shows that the PCBA **230** is coupled with the motor using screws **238** or other fasteners and openings **631** and **632.** Alternative types of coupling are also possible.

FIG. 9A shows the heater **210** that can be used in a thermal immersion circulator such as the thermal immersion circulator **100.** The heater **210** includes a hollow, substantially cylindrical, main body **910** having a tubular side wall and an annular cross-sectional shape, and a radial flange, foot, or ridge **940** coupled to a bottom end portion of the main body **910.** The tubular side wall has a longitudinal axis and a fluid inlet in communication with a fluid outlet. A fluid heating portion of the heater **210** is located between the fluid inlet and the fluid outlet.

In alternative embodiments, the main body **910** can have a generally circular, elliptical, rectangular, square, triangular, or other suitable cross-sectional shape. The main body **910** and the flange **940** can be formed from a single, integral, unitary piece of material, or they can be formed from separate pieces of material coupled to one another by any of various known techniques. In other embodiments, the heater **210** can be fabricated without the flange **940.**

The main body **910** and the flange **940** can be formed from any of various suitable materials, such as any suitable metal (e.g., polished stainless steel, copper, or aluminum), plastic (e.g., thermosetting plastics), ceramic, porcelain, etc., and these components can be made from the same material(s) or from different materials as one another. The main body **910** and the flange **940** can also be coated with non-stick materials. The materials can be electrically conductive or non-electrically conductive, heat-conductive or non-heat-conductive, and have sufficient strength and temperature tolerances to provide the heater **210** with rigidity and structure at temperatures across the intended working range of the heater **210.** Use of metallic materials such as stainless steel provides the heater **210** with very smooth surfaces and allows the heater **210** to be easily and rapidly cleaned.

The main body **910** includes a hollow cylindrical bottom portion **915** having an interior surface and an exterior surface (not shown) each having a circular cross-sectional shape. The main body **910** also includes a top portion **917** that is substantially cylindrical and has a first, left side flat wall **918** and a second, right side flat wall **919.** The left side wall **918** is positioned opposite to the right side wall **919** across the top portion **917** of the main body **910,** such that the left side wall **918** is parallel to the right side wall **919.** The top portion **917** is hollow and has an interior surface and an exterior surface each having circular cross-sectional shapes truncated by the left side wall **918** and by the right side wall **919.**

A pair of protrusions such as threaded studs **950** can be coupled to and/or extend from the top portion **917** of the main body **910.** For example, a first threaded stud can extend radially away from and perpendicular to the left side wall **918,** and a second threaded stud can extend radially away from and perpendicular to the right side wall **919.** The threaded studs **950** can include solid cylindrical protrusions having threads on an exterior surface thereof.

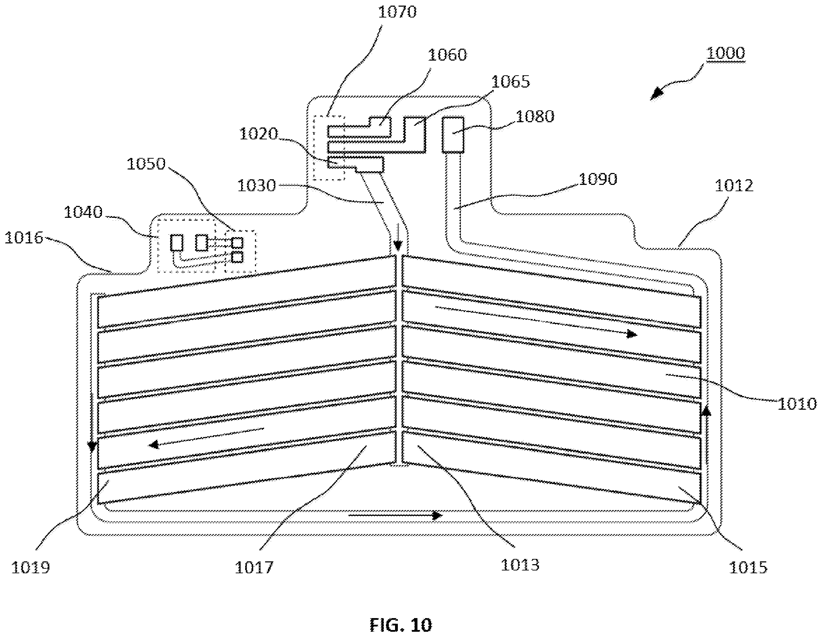

Further, the heater **210** comprises a flexible circuit board **930.** The flexible circuit board **930** comprises a heating element physically coupled to the tubular side wall and wrapped at least partially about the fluid heating portion. The flexible circuit board **930** is coupled to the exterior surface of the main body **910,** including to the exterior surface of the bottom portion **915** and to the exterior surface of the top portion **917** of the main body **910.** The flexible circuit board **930** is a thick-film flexible circuit board **930,** as described in greater detail below with references to Fig. 10. Alternatively, other implementations can use a thin-film flexible circuit board, a thin-film resistive heater, a thick-film resistive heater, a wire-wrapped heater, a flexible polyamide, or other similar technologies, instead.

The heating element comprises a plurality of resistive bands arranged on the tubular side wall spaced apart from the fluid outlet opening **920** at least by a predetermined distance and occupying substantially an entire fluid heating portion. The plurality of resistive bands collectively forms a heating surface of the flexible circuit board **930.** The distance between the heating surface and the fluid outlet opening **920** may be 11mm.

The heating surface can have a rectangular or a non-rectangular shape. The heating surface is spaced from the fluid outlet so as to reduce transfer of heat generated by the plurality of resistive bands to the foam seals **680** and **685** located adjacent the outlet while occupying substantially the entire fluid heating portion. A first portion of a resistive band adjacent the fluid outlet is longitudinally spaced further from the fluid outlet compared to a longitudinal spacing between the fluid outlet and a horizontally opposing second portion of the resistive band. In other words, a proximal end of a transversely extending resistive band is longitudinally spaced further away from the fluid outlet than a distal end of the transversely extending resistive band. By spacing the proximal end of the resistive band further away from the fluid outlet opening compared to the distal end, it is possible to achieve reduction in transfer of heat generated by the resistive band whilst heating the fluid substantially along a longitudinal length of the fluid heating portion.

In a specific form as shown in FIG. 9C, the first portion is a portion of the top resistive band which is located on the left side of tubular structure and the second portion of the top resistive band is located on the opposing right side of the tubular structure and higher relative to the first portion. In this example, the first portion and second portion of the resistive band are located on opposing or diametrically opposing surfaces of the tubular structure. In this arrangement, the first portion is of the top band is spaced longitudinally from the outlet to reduce damage to the seals **680, 685.** The longitudinal spacing between the top heating element and the outlet may vary and can be about 4.1mm or more. However, the second portion of the top band extends further along the longitudinal axis of the tubular structure relative to the first portion of the top band such that the heating element extends substantially the length of the fluid heating portion. This second portion of the top band which extends past the first portion of the top band along the longitudinal axis contributes toward additional heating efficiency by heating the fluid toward the upper end of the tubular structure but on an opposing side of the tubular structure relative to the fluid outlet.

For the purposes of this description, longitudinal spacing refers to spacing or a distance along the longitudinal axis of the tubular side wall. For example, a longitudinal distance between a portion of a resistive band and the fluid outlet opening refers to a distance between a projection of the portion of the resistive band onto the longitudinal axis of the tubular side wall and a projection of the fluid outlet onto the longitudinal axis of the tubular side wall.

The plurality of resistive bands can be diagonally arranged on the side wall of the heater **210** such that a longitudinal distance between a top end portion of the heating surface and the fluid outlet varies along the circumference of the tubular side wall. The top end portion of the heating surface refers to an end portion of the heating surface longitudinally adjacent to the fluid outlet. Such a diagonal arrangement of the resistive bands allows the heating surface to occupy substantially an entire fluid heating portion while being spaced from a seal located about the fluid outlet. The plurality of resistive bands can be arranged on the side wall of the heater in at least two columns of resistive bands, each column comprises at least one bottom resistive band adjacent to the fluid inlet and at least one top resistive band adjacent to the fluid outlet. For example, resistive bands in at least one column can form an oblique angle with a top end portion of the fluid heating portion to increase packing density of the resistive bands. As such, a distance between each top resistive band and the top end portion can vary along the column to occupy substantially an entire fluid heating portion while being spaced apart from the fluid outlet opening. Arrangement of the flexible circuit board **930** is described in more detail below with references to Figs. 9B, 9C and 10 to 11.

The radial flange **940** has an annular shape, with an outer diameter of the flange **940** being greater than an outer diameter of the main body **910.** In some implementations, an inner diameter of the flange **940** can match an inner diameter of the main body **910,** such that the flange **940** can be coupled to a bottom end of the main body **910,** leaving an interior of the main body **910** flush with an interior surface of the flange **940.** In other implementations, the inner diameter of the flange **940** can match the outer diameter of the main body **910,** such that the flange **940** can be coupled to the exterior surface of the bottom portion **915** of the main body **910** at a bottom end thereof. The flange **940** can be formed from a single flat plate of material, such as by cutting a circular opening in a flat circular piece of material. In some embodiments, the flange **940** can be made of stainless steel or polished stainless steel. Alternatively, the flange **940** can be made of copper, aluminium, plastic (e.g., thermosetting plastics), ceramic, porcelain, etc.

Thus, the flange **940** can have a rectangular cross-sectional shape along a vertical plane. The flange **940** can form one part of a seal between the heater **210** and another component of a thermal immersion circulator **100** of which the heater **210** is a part. In some implementations, the main body **910** and the radial flange **940** can be formed unitarily, such as in a single molding process, such as in a single metal injection molding process.

The main body **910** also comprises an oblong opening **920** positioned at the front portion of the main body **910** such that the opening **920** is spaced equidistantly from the left side wall **918** and the right side wall **919.** The heater **210** is preferably symmetrical about the opening **920.** The opening **920** can have a generally rectangular shape having an aspect ratio between a horizontal axis and a vertical axis ranging from about 3:1 to 1:3 to provide more space between the seals **680, 685** and heating tracks or resistive bands of the flexible circuit board **930.** The aspect ratio may vary based on design requirements. The opening **920** is positioned closer to the top end of the main body **910** than to the bottom end of the main body **910.** In alternative implementations, the opening **920** can have any other suitable shape a person skilled in the art could design.

A top end of the opening **920** can be co-planar with the bottom surface of the boss **730** of the bottom plate **720.** Thus, any bubbles entering or formed within the interior of the main body **910** can flow out of the interior of the main body **910** and out of the circulator **100,** thereby reducing deleterious effects of air or other gaseous build-up in the interior of the main body.

When the heater **210** is in use, an opening at the bottom of the main body **910** can be an inlet to the heater **210,** the opening **920** can be an outlet of the heater **210,** and the interior of the heater **210** can be a conduit, passage, or channel in fluid communication with the inlet and the outlet. As described further below, a thick film flexible circuit board **930** can be wrapped around an external surface of the main body **910** between the inlet and the outlet, and thus can be wrapped around the conduit that fluidly couples the inlet to the outlet.

The inlet and the outlet can be separated by the flexible circuit board **930** and the flexible circuit board **930** can be positioned to heat fluid passing between the inlet and the outlet. A fluid flow path through the heater **210** can extend from the inlet, through the conduit past the flexible circuit board **930,** to the outlet. The flexible circuit board **930** can be separated from the fluid passing through the interior of the main body **910** by a distance corresponding to the thickness of the tubular side wall of the main body **910,** which can be 0.5 mm, 1.0 mm, 1.5 mm, 2 mm, 2.5 mm, between 0.1 mm and 5 mm, or between 0.5 mm and 2.5 mm.

When the heater **210** is in use, a significant current can pass through controlling electronics (e.g., the TRIACs) and the other electrical components of the flexible circuit board **930.** For example, using a 120V AC, 60 Hz power supply, the heater **210** can draw 1100±100 W of power total. Such a large power draw can heat the controlling electronics (e.g., the TRIACs), in some cases, to undesirably high temperatures.

In the heater **210,** the controlling electronics (e.g., the TRIACs or any suitable electronic switch either enclosed within an encapsulant or an encapsulating package, or not encapsulated and built integrally with the main body **910)** are mounted in direct contact with a surface of the main body **910,** which can comprise a highly heat-conductive material such as steel, and which is in direct contact with the flexible circuit board **930.** That is, the controlling electronics (e.g., the TRIACs) and the flexible circuit board **930** can be in direct contact with a common heat conductive surface. The term "direct contact," in this context, includes contact through one or more substrate layers, such as an adhesive layer, a fill pad, a thermally conductive film, or a grease. A fluid (e.g., water) drawn through the heater **210** can act as a coolant for the controlling electronics (e.g., the TRIACs) to draw heat conducted from the controlling electronics through the main body **910** away from the controlling electronics. Thus, the controlling electronics (e.g., the TRIACs) can be water-cooled. Substantially all of the heat generated by the TRIACs can be transferred into the fluid being heated, such that a temperature of the TRIACs can be substantially the same as the temperature of the fluid being heated. This heat exchange pathway simultaneously transfers heat away from components that benefit from cooling, and into the fluid that is to be heated. Thus, the heating element, i.e. resistive bands of the flexible circuit board **930,** as well as the controlling electronics, can be thermally coupled or thermally conductively coupled to the fluid passing through the main body **910.**

In some embodiments, the interior surface of the heater **210** can be textured or texturized to retain some of the fluid being heated (e.g., some of the fluid can cling to the textured surfaces by surface tension) when the thermal immersion circulator **100** and the heater **210** are removed from the body of the fluid being heated. For example, the interior surfaces of the heater **210** can be texturized so they are hydrophilic. Alternatively, the interior surfaces can also be coated with a hydrophilic coating to improve the retention of a fluid such as water by the interior surfaces when the heater **210** is removed from the body of the fluid. Water or any other fluid retained on the interior surfaces can provide a heat reservoir to protect the thermal immersion circulator **100** and the heater **210** from transient thermal effects arising from the removal of the circulator **100** and heater **210** from the body of the fluid being heated, such as by removing heat from the heater **210** through latent heat of vaporization of the fluid.

In some embodiments, the heater **210** includes one or more temperature responsive transducers, e.g., thermistors, thermocouples, resistance temperature detectors (RTD), etc. As one specific example, the heater **210** can include two thermistors: a first thermistor near the bottom of the main body **910,** such as on the flange **940** and a second thermistor at the flexible circuit board **930.** Optionally, the heater **210** can comprise a third thermistor near the slot **920.**

The first and third thermistors can provide information regarding the temperature of the fluid being heated to facilitate more precise control of the heater **210.** The second thermistor can provide information regarding the temperature of the heating element to facilitate the prevention of their overheating.

A thermal immersion circulator including the heater **210** can include control circuitry or a computer that can direct the operation of the flexible circuit board **930,** such as through the TRIACs. As one example, the control circuitry or computer can accept a desired or target temperature of a fluid to be heated, such as a temperature designated by a user of the thermal immersion circulator. The control circuitry or computer can direct the TRIACs to switch both the heating elements on, and can direct the motor **220** to turn the impeller **226.** The heating elements can generate heat that is conducted through the main body **910** to the fluid being heated within the interior of the main body **910.** Once the temperature of the fluid being heated, as measured by the first thermistor or the third thermistor, reaches the target temperature, the control circuitry or the computer can direct the TRIACs to switch the heating element off. The TRIACs receive power from the PCBA 230 and in turn power the fuse 675.

To maintain the fluid at the target temperature, the control circuitry or the computer can direct the TRIACs to intermittently switch on one of the heating elements. In some implementations, the control circuitry or the computer can direct the TRIAC to switch the heating element on and off at pre-determined time intervals. In other implementations, the control circuitry or the computer can direct the TRIAC to switch the heating element on when the temperature of the fluid being heated, as measured by the first thermistor or the third thermistor, falls below the target temperature by a pre-determined amount, and off when the temperature of the fluid being heated, as measured by the first thermistor or the third thermistor, rises above the target temperature by a pre-determined amount.

As another example, if the temperature of one of the heating elements, as measured by the second thermistor, exceeds a threshold temperature, such as a temperature at which the flexible circuit board **930** might suffer damage, then the control circuitry or computer can direct the TRIACs to switch the heating elements off.

FIGS. 9B and 9C are illustrations of front and left-side views, respectively, of the heater 210.

FIG. 9B shows that the transitions between the bottom portion **915** and the left side wall **918** and right side wall **919** of the top portion **917** of the main body **910** are curved. FIG. 9B also shows that the opening **920** extends through a front portion of the tubular side wall of the main body 910, that is, through a curved front portion of the tubular side wall of the cylindrical main body **910.**

FIG. 9B also shows that, when the heating element is wrapped about the tubular side wall of the heater **210,** the left hand side and right hand side of the heating element are arranged spaced apart from each other so that 'hot spots' formed by the resistive bands are positioned away from the opening **920** and the fluid outlet seals **680** and **685** to prevent deformation of the foam seals **680** and **685** even under abnormal heating conditions. The resistive bands are preferably spaced apart from each other substantially symmetrically about the vertical axis of the opening **920** to form a column free from heating elements below the opening **920** and coinciding with the vertical axis of the opening **920.**

Additionally, as shown in FIG. 9B, a distance between a bottom end portion of lower resistive bands and the flange or the bottom end portion of the heater varies.

The heater **210** also comprises a boss **960** downwardly extending from the flange **940.** An internal diameter of the boss **960** can match the internal diameter of the bottom end portion of the main body **910** and an external diameter of the boss **960** can match the external diameter of the bottom end portion of the main body **910** such that the boss **960** flush with the main body **910.** The boss **960** can be integrally formed with the side wall of the heater or alternatively be a separate component.

FIG. 9C shows an arrangement of resistive bands in one column of the heating element. In particular, rather than being horizontally arranged, the resistive bands are diagonally arranged as shown in Fig. 9C to increase packing density while allowing the resistive bands to be spaced apart from the fluid outlet opening **920** and foam seal **680** and **685** thus substantially preventing seal deformation even under abnormal heating conditions.

The diagonal arrangement of resistive bands also allows the fluid bath temperature to be more accurately measured since a distance from a fluid bath temperature sensor coupled to the heater and typically located on the flange **940** is increased. Specifically, according to the present disclosure, a resistive band adjacent to the fluid inlet is spaced at least by a predetermined distance, preferably by at least 10 mm, from the fluid bath temperature sensor. The predetermined distance may vary based on design requirement. Such spacing reduces interference of heat generated during operation of the heating element when measuring a temperature of the fluid entering the fluid inlet or heater by the fluid bath temperature sensor. Alternative arrangements of the resistive bands are also possible as long as the predetermined distance from the seals **685** is maintained. For example, the resistive bands can be vertically arranged.

FIG. 10 shows a plan view of a layout of the printed circuit board **930.**

The printed circuit board **930** is arranged on the exterior surface of the main body **910** of the heater tube so that 'hot spots' are positioned away from the seals **680** and **685.** For the purposes of present disclosure, 'hot spots' refer to the heat or temperature of about 400°C or higher generated by resistive bands. The described arrangement of the resistive bands allows 'hot spots' to be positioned away from the fluid outlet and seals 680 and 685 to prevent deformation of seals and plastic parts of the fluid outlet.

Additionally, a distance between a first end of the bottom two resistive bands and the bottom end portion of the heater **210** is increased to enhance the accuracy of fluid bath temperature sensor readings located at an upper surface of the flange **940.** The distance is preferably equal to or larger than 10mm to ensure the accuracy of the readings of the fluid bath temperature sensor. The distance may vary based on design requirements.

The printed circuit board can be a thick-film printed circuit board **1000.** In alternative arrangements, the printed circuit board can be a thin-film flexible circuit board, a thin-film resistive heater, a thick-film resistive heater, a wire-wrapped heater, a flexible polyamide, or other similar technologies, instead.

The thick-film printed circuit board **1000** can include a plurality of resistive bands or heater tracks **1010.** For example, as illustrated in FIG. 10, the circuit board **1000** can have 12 resistive bands. The plurality of resistive bands **1010** can draw 1100W of power total. Each of the resistive bands **1010** can include a thick film band formed on the base layer from any suitable resistive material. For example, the resistive bands **1010** can comprise an FeCrAl alloy, such as the commercially available FeCrAl alloy sold under the brand name Kanthal^{®}. For example, a resistive paste can be laid down on the base layer, and a width and a thickness of the paste can be carefully controlled to provide each resistive bands **1010** with a well-defined resistance.

The thick-film printed circuit board **1000** comprises two portions **1012** and **1016** adjacent to the fluid outlet openings **170** and **920.** The plurality of resistive bands **1010** can be arranged on the thick-film printed circuit **1000** in at least two adjacently located and electrically coupled columns. The resistive bands in each column are arranged diagonally and substantially in parallel to each other such that resistive bands in each column have a fluid inlet end and a fluid outlet end.

Each column of the resistive bands comprises at least one bottom resistive band adjacent to a bottom end portion of a fluid heating portion of the thick-film printed circuit board **1000** and at least one top resistive band adjacent to a top end portion of the fluid heating portion. A distance between each top resistive band and the top end portion varies along the at least two columns to occupy substantially an entire fluid heating portion while being spaced apart from the fluid outlet openings **170** and **920.** The plurality of resistive bands **1010** is spaced apart from the fluid bath temperature sensor at least by a predetermined distance. The predetermined distance can be at least 10mm or more. The distance may vary based on design requirements. A distance between each bottom resistive band and the bottom end portion varies along the at least two columns to enhance accuracy of temperature sensor readings. The resistive bands **1010** are effectively arranged in a zig-zag manner, however, other arrangements of resistive bands where the resistive bands are spaced apart from the fluid outlet openings **170** and **920** at least by the predetermined distance are also possible. It should be noted that the resistive bands **1010** preferably have substantially the same area and/or perimeter.

For example, as shown in Fig. 10, resistive bands in a first column adjacent to **1012** can have a first (upper) end **1013** in proximity to the fluid bath temperature sensor and a second (lower) end **1015** in proximity to the longitudinal axis of the fluid outlet openings **170** and **920.** Resistive bands in the second column adjacent to **1016** can have a first (upper) end **1017** in proximity to the fluid bath temperature sensor and a second (lower) end **1019** in proximity to the longitudinal axis of the fluid outlet openings **170** and **920.** An upper end **1013** of each resistive band in the first column is juxtaposed with an upper end **1017** of a corresponding resistive band from the second column. The flexible circuit board **1000** is wrapped around the heater **210** such that the second (lower) ends of the resistive bands in the first column are in proximity but spaced apart from to the second (lower) ends of the resistive bands in the second column. That is, the flexible circuit board **1000** is wrap substantially all the way around, the main heater **210.** The flexible circuit board **1000** can have a non-zero radius of curvature, such as a radius of curvature between one quarter inch and four inches, or between one half inch and two inches, or a radius of curvature between one inch and one and a half inches.

The discussed arrangement allows the plurality of resistive bands to be spaced apart from the fluid outlet openings **170** and **920** and, consequently, from the foam seals **680** and **685** at least by a predetermined distance. Spacing of the plurality of the resistive bands from the foam seals **680** and **685** enables reduction or prevention of the damage to the foam seals **680** and **685** during operation of the thermal immersion circulator, which is particularly advantageous in case of an abnormal heating event.

The thick-film printed circuit board **1000** also comprises a plurality of conductive pathways formed on an electrically insulating base layer. The plurality of conductive pathways can include a first neutral pathway **1030** and a second neutral pathway **1090.** The first neutral pathway **1030** electrically couples the first (upper) ends **1013** and **1017** of each resistive band to each other and to a first neutral terminal **1020.** The second neutral pathway **1090** electrically couples the second (lower) ends **1015** and **1019** of each resistive band to each other and to a second neutral terminal **1080.** The second neutral terminal **1080** can be powered or driven by a 110V-120V or 220V-240V AC power source. An example current flow for the resistive bands is shown in FIG. 10. Specifically, the current may flow from the first neutral terminal 1020, through the resistive bands from the first (upper) ends 1017 and 1013 to second (lower) ends 1019 and 1015 respectively, and then along the second neutral pathway 1090 towards the second neutral terminal 1080.

The power to the thick film circuit board 1000 is supplied from the fuse 675 which is powered by TRIACs.

The thick-film printed circuit board **1000** can also comprise a live terminal **1065** for which the second neutral pathway **1090** and the second neutral terminal **1080** serves as a return path and a return terminal. The live terminal **1065** can be powered or driven by a 110~120V or 220V-240V AC power source. The thick-film printed circuit board **1000** additionally comprises a gate **1060** adjacent to but electrically separated from the live terminal **1065.** The gate **1060** can be located above the live terminal **1065,** and the live terminal **1065** can be located above the first neutral terminal **1080.**

The terminals can be electrically coupled in soldered electrical connection to other electrical components of the thick-film printed circuit board **1000.** In particular, the terminal can be solderable so as to allow soldered electrical connection of other electrical components to the thick-film printed circuit board **1000.** For example, a controlling active power switch (e.g. TRIAC) is electrically coupled to each end **1070** of the gate **1060,** the live terminal **1065** and the first neutral terminal **1020.**

The thick-film printed circuit board **1000** can additionally have a heater temperature sensor **1050** coupled to at least some of the resistive bands **1010** (not shown). The heater temperature sensor **1050** can be, for example, a heater thermistor which can be surface mount coupled to tracks formed in the thick-film printed circuit board **1000.** Additionally, the heater temperature sensor **1050** is electrically coupled to the PCB **230** and electronics using wires **1040.**

The flexible circuit board **1000** also includes a top protective layer that overlays the rest of the electrical components of the printed circuit board **1000** to protect them from water ingress or other potential contaminants.

The flexible circuit board **930** (also shown as **1000)** additionally comprises a mechanically crimped thermal fuse, such a thermal fuse **675,** supported by a thermal fuse holder, such a thermal fuse holder **670.** The thermal fuse **675** is configured to detect the heat caused by over-current due to short circuit or a component breakdown and is also configured to open the circuit in response to the detected heat.

The thermal fuse holder **670** mitigates against desoldering of the thermal fuse **675** during heater runaway and the risk of short circuit. The thermal fuse **675** can have an upper end and a lower end. The upper end of the thermal fuse **675** is electrically coupled to the second neutral pathway 1090 and to the PCB **230.** The lower end of the thermal fuse **675** is electrically coupled to the second neutral terminal 1080 and physically soldered to the exterior surface of the heater **210.**

The flexible circuit board **930** may not have a pressure sensor since logic controlling the thermal immersion circulator **100** does not require calculating device altitude for temperature limitation.

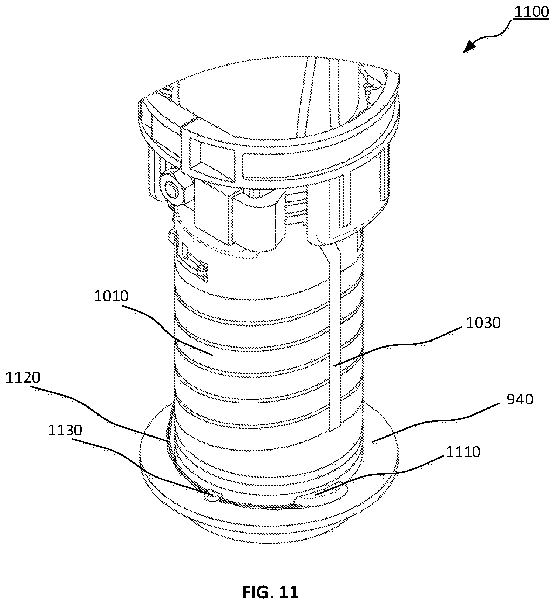

FIG. 11 illustrates the flexible circuit board **1000** coupled to the exterior surface of the heater **210.** The flexible circuit board **1000** includes a plurality of resistive bands **1010,** which together form a heating element. The flexible circuit board **1000** includes the first neutral pathway **1030** that is electrically coupled first (upper) ends **1013** and **1017** of the resistive bands **1010.** The first neutral pathway **1030** is positioned oppositely the fluid outlet openings **170** and **920.**

The thermal immersion circulator **100** also includes the fluid bath temperature sensor, such as a fluid bath temperature thermistor **1110,** attached to the flange **940** and electrically coupled with the PCB **230** and the electronics module using a wire **1120.**

The wire **1120** is secured in position using an adhesive, preferably a UV glue **1130** to hold the wire 1120 in position.

The thermistor **1110** also can be used to determine that the circulator **100** has been removed from a body of fluid. For example, a rate of change of the temperature measured by the thermistor **1110** can be smaller when the circulator **100** is immersed in a body of a fluid than when the circulator **100** is removed from the body of the fluid. A threshold value for the rate of change of the temperature measured by the thermistor **1110** can be pre-determined based on this difference so that when the rate of change of the temperature measured by the thermistor **1110** exceeds the threshold, the heater **210** is turned off to prevent overheating.

The thermal fuse **675** and the thermal fuse holder **670** can be electrically coupled to the second neutral pathway **1090** opposite to the first neutral pathway **1030** and near the fluid outlet openings **170** and **920.** In some arrangements, the thermal fuse **675** can include a spring that biases leads from the second neutral pathway **1090** and the second ends of the resistive bands **1010** apart from one another. The thermal fuse **675** can include a conductive element that physically and electrically couples the leads to one another against the action of the spring, and that melts at a predetermined temperature. Once the conductive element melts, the spring can open the circuit across the gap and between the neutral pathway **1090** and the resistive bands **1010.**

The flexible circuit board **1000** can be provided with a 120 voltage across the resistive bands **1010,** which can produce 1100 watts. Power to the resistive bands **1010** can be cycled on and off over time to provide a desired time-averaged power, such as a time-averaged power less than 1100 watts.

Fig. 12 is a cross-sectional view of several components of the thermal immersion circulator **100.**

As shown in FIG. 12, the coupling assembly **250** is secured within the housing **110** using an annular snap fit feature on the mounting frame **231.** The coupling assembly **250** in turn secures the heater **210** and other components within the housing **110.**

The coupling assembly **250** substantially prevents ingress of fluid from within the heater **210** to the rest of the thermal immersion circulator **100.**

The coupling assembly **250** comprises a main body **1205** dimensioned to engage the housing **110** and the side wall **1210** of the heater **210** to secure the heater **210** with respect to the housing **110.** The main body **1205** extends between the side wall **1210** and the housing **110** thereby forming a cavity between the side wall and the housing. The coupling assembly **250** also comprises the seal **260** secured on the main body **1205** with respect to the side wall **1210** and the housing **110** and extends around the main body **1205** and into the cavity. The seal **260** comprises at least one laterally extending protrusion **1215** extending outwardly and in contact with the housing **110** and the side wall **1210** to substantially prevent ingress of fluid from outside the circulator **100** to the rest of the thermal immersion circulator **100.** The coupling assembly **250** and its seals **260** can allow a user to remove the inlet to access the interior of the heater **210,** such as to clean the heater **210,** without breaking a seal of the thermal immersion circulator **100.**

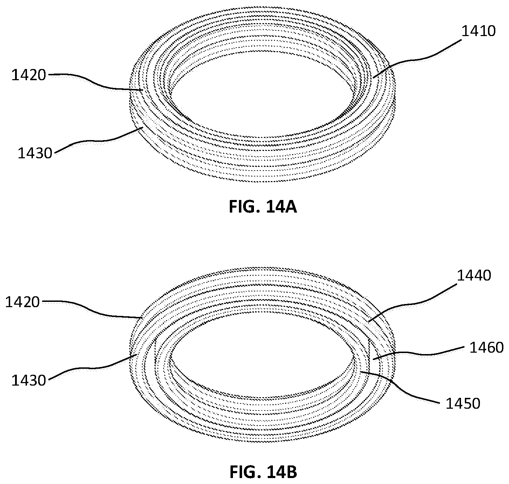

The coupling assembly **250** can also comprise a reinforcement element, such as a protrusion **270,** positioned substantially within the seal **260** to reinforce the seal **260** and thereby substantially prevent water ingress into the cavity. The reinforcement element locates the seal **260** and ensures balanced compression of the seal **260** against the housing **110** and heater **210** which is particularly advantageous under abnormal heating conditions. The reinforcement element **270** can be extending vertically away from the main body **1205** along the side wall **1210** into the cavity. As shown in Figs. 14A and 14B, the seal **260** can comprise an outer sealing portion **1440,** an inner sealing portion **1450** and an upper sealing portion **1410** together forming a reinforcement cavity **1460** dimensioned to receive the reinforcement element **270.** The seal **260** can be secured on and over the reinforcement element **270.** The outer sealing portion of the seal **260** seals the coupling assembly **250** against the housing **110** and the heater **210** to substantially prevent water ingress into the cavity. The upper sealing portion 1410 and the inner sealing portion 1450 of the seal **260** isolate the main body **1205** of the coupling assembly **250** from the heater **210,** so as to block heat transfer from the heater **210** to the coupling assembly **250.** Without the seal, the heat transferred to the coupling assembly **250** may potentially deform the coupling assembly **250** during operation, and specifically abnormal operation, of the thermal immersion circulator, which can result in water ingress issues.

The side wall **1210** of the heater **210** can comprise a lateral protrusion, such as the flange **280** or **940,** extending into the cavity. An underside of the flange **280** is in contact with the upper sealing portion 1410 to secure the seal on and over the reinforcement element **270,** the upper sealing portion of the seal **260** isolates the main body **1205** from the side wall **1210.** The inner sealing portion and the outer sealing portion of the seal **260** are preferably double-ribbed, e.g. ribs **1420** and **1430** as shown in Figs. 14A and 14B. Additionally, the upper sealing portion preferably has two or more secondary ribs which can be of smaller height than the ribs of the double-ribbed configuration of the inner sealing portion and the outer sealing portion. The double-ribbed configuration of the seal **260** is particularly advantageous as it has an additional layer of safety if one of the ribs becomes damaged or fails. The seal **260** is preferably removably coupled to the main body **1205** to allow replacement during maintenance of the thermal immersion circulator **100.**

The boss **960** (shown as **1220** in Fig. 12) can extend vertically away from the peripheral flange **940** of the heater **210** to be in contact with the radial seal **260.** The inner and upper sealing portions of the seal **260** can isolate the heater **210** and the resistive bands **1010** from the coupling assembly **250.** The upper portion of the seal **260** is located beneath the underside of the flange **280** or **940.** The outer sealing portion of the seal **260** seals the coupling assembly **250** against the housing **110.** Each of the inner and outer portions of the seal **260** is preferably 'double-ribbed'.

The main body **1205** can also comprise at least one protrusion 1330 located on an outer peripheral surface of the main body **1205.** The protrusion is coupled to at least one channel located on an inner surface of the housing **110** to locate the coupling assembly **250** within the housing **110.** The advantages of the described configuration of the coupling assembly **250** arises from the fact that the coupling assembly **250** no longer relies on tensile load to compress seals and thus eliminates threads on the housing **110** and the main body **1205** of the coupling assembly **250.** The above described configuration of the coupling assembly **250** reduces the risk of cracking on the main body of the coupling assembly **250** and the housing **110.**

FIG. 12 also illustrates that the housing bumper **241** can be mounted so that a peripheral flange of the housing bumper **241** engages an interior surface of the housing **110** to maintain the housing bumper **241** within the housing **110.** The housing bumper **241** can extend out of the housing **110** through an opening in the housing **110,** such that a body of the housing bumper **241** protrudes beyond an exterior surface of the housing **110.** The housing bumper **241** can be positioned below the seal **260** of the coupling assembly **250** such that the opening in the housing **110** through which the housing bumper **241** extends does not break the seal of the thermal immersion circulator. As shown in FIG. 2, the housing bumper **241** can be positioned on the same side of the circulator **100** as the clip **530,** which can be positioned on the opposite side of the circulator **100** from an opening **170** in the side of the housing **110** and a corresponding opening **641** in the side of the heater **210.**

The housing bumper **241** can comprise a material that has a higher coefficient of friction than the housing **110** and that is more flexible than the housing **110.** Thus, when a user clips the thermal immersion circulator **100** to a side of a container, the body of the housing bumper **241** extending through the opening in the housing **110** can rest against the side of the container, such that the housing **110** is separated and not in contact with the side of the container. Thus, vibrations from the motor **220** and impeller **226** are not transmitted directly (or are at least transmitted more indirectly) to the container. Further, the higher coefficient of friction of the housing bumper **241** reduces movement of the circulator **100** with respect to the side of the container, such chatter of the circulator **100** resulting from the vibrations of the motor **220** and impeller **226.** Further, when a user clips the thermal immersion circulator **100** to a side of a container, the opening **170** in the side of the housing **110** and the opening **641** in the side of the heater **210** can face away from the side of the pot, improving fluid dynamics of the fluid as it leaves the thermal immersion circulator **100.**

FIG. 12 also shows that the lower inlet assembly **130** coupled to the coupling assembly using screw threads on the internal surface of the main body **1205** of the coupling assembly **250** and complimentary screw threads on the external surface of the lower inlet assembly **130.**

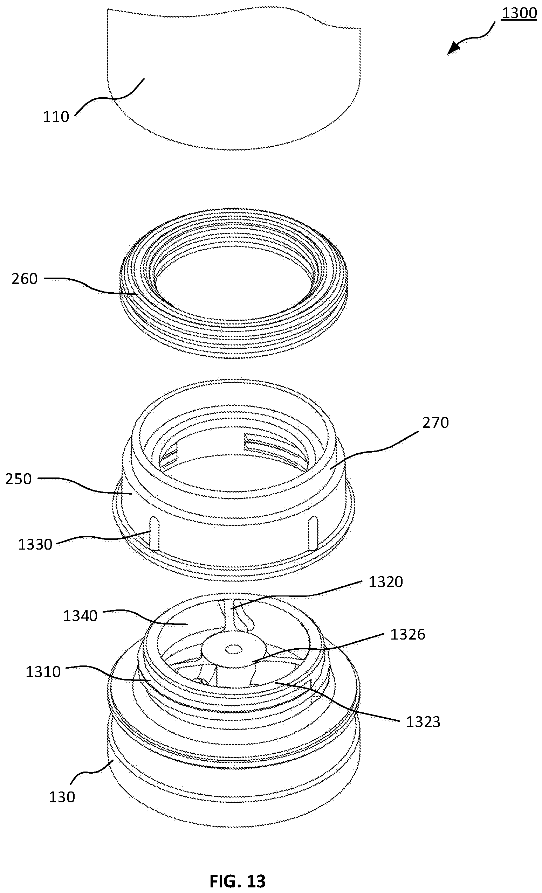

FIG. 13 shows an exploded view of the coupling assembly of and the lower inlet assembly **130.** The lower inlet assembly **130** comprises screw threads **1310** disposed on the external surface of the lower inlet assembly **130** to be coupled with complimentary internal threads of the main body of the coupling assembly **250.** The lower inlet assembly **130** also comprises a plurality (e.g., three) spokes or struts **1320.** The plurality of spokes or struts **1320** couple an outer rim portion **1323** of the lower intel assembly **130** to an inner hub portion **1326.** Each of the struts **1320** can extend radially inward and outward between the inner hub portion **1326** and the outer rim portion **1323,** and can have an airfoil-shaped body. In some implementations, each of the struts **1320** is also pitched at an angle, or has a generally helical shape about the inner hub portion **1326,** so that the struts **1320** form a stationary propeller or an inductor that has a pitch or an angle of attack that is oriented in the same direction, or that is oriented in the opposite direction, as the pitch or angle of attack of the blades of the impeller **226.**

As shown in Fig. 13, the main body of the coupling assembly **250** may comprise protrusions **1330** to locate the coupling assembly within the housing **110.** The protrusions **1330** are configured to co-operate with channels in the internal surface of the housing **110.**

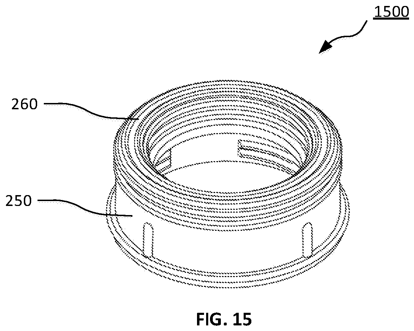

Additionally, as discussed with references to Fig. 12, the seal **260** is configured to be secured on the main body of the coupling assembly **250** over the protrusion **270** of the coupling **1205** in a manner where the protrusion **270** provides reinforcement to the seal **260.** The coupling assembly **250** in an assembled configuration is shown in Fig. 15.

When the thermal immersion circulator **100** is in use, the motor **220** can be operated to turn the impeller **226** to draw the fluid being heated into the circulator **100** inward through an entrance of the inlet assembly **130,** inward and upward through a flow path **1340** of the inlet assembly **130,** upward through the coupling assembly **250** and into the heater **210.**

The inlet assembly **130** allows the circulator **100** to stand vertically in a container while resting on the anti-slip pad (not shown), which can be formed from silicone to reduce the chance of the circulator **100** falling over in the container, and allows the circulator **100** to be held to the container by the magnet. In such an embodiment, the clip can be omitted. The inlet assembly **130** also provides an entrance to the circulator at a relatively low elevation so that fluid can be drawn into the circulator **100** even when a fluid level of the fluid being heated is relatively low.

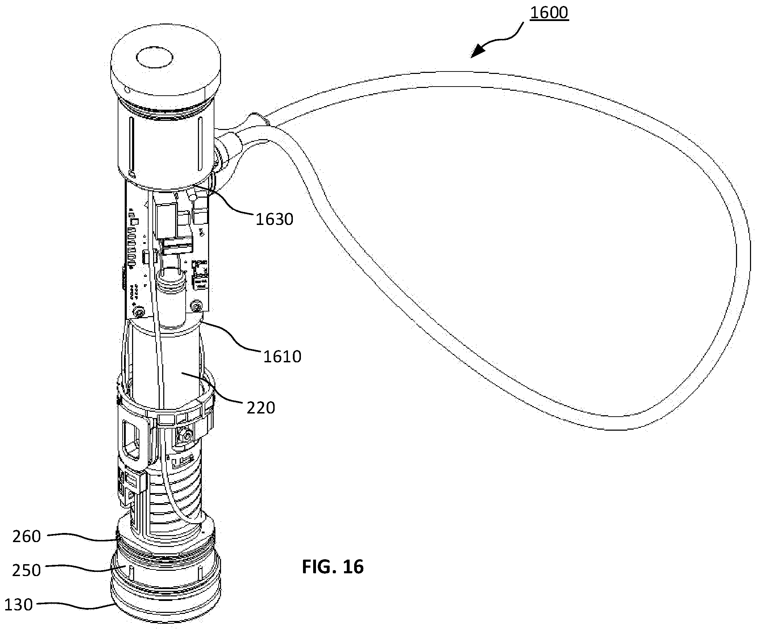

FIG. 16shows a perspective view **1600** of assembled internal components of the thermal immersion circulator **100.** The thermal immersion circulator **100** can have an upper isolation barrier **1630** and a lower thermal isolation barrier **2010.** The thermal isolation barriers **1630** and **1610** divide the interior of the thermal immersion circulator **110** into three distinct thermal zones: a first, upper PCBA zone positioned above the thermal isolation barrier **1630,** a second, lower PCBA zone positioned in between the upper isolation barrier **1630** and the lower thermal isolation barrier **1610,** and a third, motor zone positioned below the lower thermal isolation barrier **1610.** The first thermal zone can operate at temperatures at or around 70° C, the second thermal zone can operate at temperatures at or around 100° C, and the third thermal zone can operate at temperatures at or around 100° C. The lower inlet assembly **130** can be removable from the rest of the thermal immersion circulator **100,** for example, to facilitate cleaning of the heater **210.** Similarly, the top cap assembly **120** can be removable from the rest of the thermal immersion circulator **100,** for example, to facilitate access to and repair of the electrical components housed therein.

Any of the thermal immersion circulators described herein can be controlled in any of various suitable ways. For example, a thermal immersion circulator can be communicatively coupled with a source of instructions or commands, for example communicatively coupled with a control subsystem, a terrestrial or satellite broadcaster, or RF or NFC beacons. The communicative coupling can be tethered (i.e., wires, optical fiber, cable(s)). The communicative coupling can be untethered (i.e., radio frequency or microwave frequency transmitters, receivers and/or radios; infrared transmitters and/or receivers).

A thermal immersion circulator may include one or more receivers or ports to receive communications. For example, a thermal immersion circulator can include a USB compliant port to receive communications. The port can be accessible from the exterior of a housing of the thermal immersion circulator. The port can advantageously facilitate communicative coupling between the thermal immersion circulator and an external source of signals or information, for example via one or more wires, ribbon cables, optical fibers, or cables. Such can be used to provide control signals from the external source to the thermal immersion circulator to control operation of the thermal immersion circulator.

A thermal immersion circulator can include a port or receiver or connector or receptacle to receive control signals or other input. For example, a thermal immersion circulator can include a wired port or wired receiver (e.g., Ethernet^{®}, USB^{®}, Thunderbolt^{®}, Lighting^{®}, electrical or optical signaling) to receive signals from an external source. Also for example, a thermal immersion circulator can include a wireless port or wireless receiver (e.g., receiver, transceiver, radio, 802.11 compliant, BLUETOOTH^{®}, WI-FI^{®}, radio frequency, microwave frequency or infrared signaling) to wirelessly receive signals from an external source (e.g., smartphone, tablet computer, server computer, other processor-based device). For instance, a BLUETOOTH^{®} compliant radio can provide short-range wireless communications therebetween. A thermal immersion circulator can include one or more antennas (e.g., stripline RF antenna) for wireless communications.

In some implementations, a thermal immersion circulator can include an internal, integrated input controller, such as coupled to a printed circuit board thereof. Input received by the thermal immersion circulator, by any one of the input methods described herein, can include instructions or commands to turn on a heater of the circulator, to turn off the heater of the circulator, to heat a fluid to a desired temperature, to heat a fluid for a desired amount of time, to heat a fluid to a plurality of different temperatures for a plurality of different times in sequence, or to follow any other suitable sequence of instructions.

The thermal immersion circulator **100** can be used in various applications. In general, the thermal immersion circulators described herein can be used to heat or circulate a body of any fluid that can safely flow through the thermal immersion circulator. As one specific example, the thermal immersion circulators described herein can be used in sous vide food cooking, a technique that cooks food at lower than typical temperatures (e.g., 150-160° F.) for longer than typical times. As another example, the thermal immersion circulators described herein can be used in laboratory settings, such as in environmental, microbiological, or other laboratories.

The scope of the invention is defined by the appended claims that follow.

In the above description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with the technology have not been shown or described in detail to avoid unnecessarily obscuring descriptions of the embodiments.

Unless the context requires otherwise, throughout the specification and claims that follow, the word "comprising" is synonymous with "including," and is inclusive or open-ended (i.e., does not exclude additional, unrecited elements or method acts).

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the context clearly dictates otherwise. It should also be noted that the term "or" is generally employed in its broadest sense, that is, as meaning "and/or" unless the context clearly dictates otherwise.

The headings and Abstract of the Disclosure provided herein are for convenience only and do not limit the scope or meaning of the embodiments.

As used herein, "above" and "below," "top" and "bottom," "vertical" and "horizontal," and other similar terms refer solely to the relative positions of components as they are illustrated in the Figures and are intended to convey their ordinary meaning within the context of the Figures. In some embodiments, these terms can carry their ordinary meaning within the context of real-world implementations, for example, such that gravity pulls an item from a first location above a second location toward the second location. Use of these terms alone, however, is not intended to convey that a first component described as being above another component within the context of the Figures is necessarily above that component in a real-world implementation.

As used herein, "coupled," "connected," and other similar terms, when used alone, mean physically coupled or physically connected. Components that are electrically or otherwise "coupled" or "connected" are described as such.

## Claims

1. A heater (210) for a thermal immersion circulator (100), the heater (210) comprising:
a tubular side wall having longitudinal axis, a fluid inlet in communication with a fluid outlet (920), and a fluid heating portion located therebetween;
at least one seal (680, 685) located adjacent the outlet (920); and
a heating element (930) physically coupled to the tubular side wall and wrapped at least partially about the fluid heating portion, the heating element (930) comprising a plurality of resistive bands (1010) arranged on the tubular side wall,
**characterized in that**
a first portion of a resistive band of the plurality of resistive bands (1010) adjacent the fluid outlet (920) is longitudinally spaced further from the fluid outlet (920) compared to a longitudinal spacing between the outlet (920) and an opposing second portion of the resistive band arranged on the side wall so as to reduce transfer of heat generated by the resistive band to the seal (680, 685) whilst heating the fluid substantially along a longitudinal length of the fluid heating portion.

2. The heater (210) according to claim 1, wherein the plurality of resistive bands (1010) forms a heating surface spaced from the fluid outlet (920) so as to reduce transfer of heat generated by the plurality of resistive bands (1010) while occupying substantially the entire fluid heating portion.

3. The heater (210) according to claims 1 or 2, wherein a resistive band adjacent the fluid inlet is spaced at least by a predetermined distance from a fluid bath temperature sensor coupled to the heater (210) so as to reduce interference of heat generated during operation of the heating element (930) upon a temperature measurement of the fluid entering the fluid inlet by the temperature sensor.

4. The heater (210) according to any one of claims 1 to 3, wherein a distance between a top end portion of the heating surface and the fluid inlet varies along the circumference of the tubular side wall to occupy substantially an entire fluid heating portion while being spaced from the seal (680, 685) located about the fluid outlet (920).

5. The heater (210) according to any one of claims 1 to 4, wherein the plurality of resistive bands (1010) comprises at least two columns of resistive bands, each column comprises at least one bottom resistive band adjacent to the fluid inlet and at least one top resistive band adjacent to the fluid outlet (920).

6. The heater (210) according to claim 5, wherein a distance between each top resistive band and a top end portion of the heater (210) varies along the at least two columns.

7. The heater (210) according to any one of claims 1 to 6, wherein the heating element (930) is a film printed heater (1000), the film printed heater (1000) comprises a plurality of conductive pathways formed on the electrically insulating base layer, the plurality of conductive pathways comprising:
a first neutral pathway (1030) that electrically couples a first end of each resistive band to each other and to a first neutral terminal (1020); and
a second neutral pathway (1090) that electrically couples a second end of each resistive band to each other and to a second neutral terminal (1080);
the film printed heater (1000) further comprises:
a live terminal (1065) for which the second neutral pathway (1090) and the second neutral terminal (1080) serves as a return path and a return terminal;
a gate (1060) adjacent to and electrically separated from the live terminal (1065).

8. The heater (210) according to claim 7, further comprising a mechanically crimped thermal fuse (675) and a fuse holder (670), wherein an upper end of the thermal fuse (675) is electrically coupled to the second neutral pathway (1090) and to a PCB controlling the device for heating fluid and a lower end of the thermal fuse (675) is electrically coupled to the second neutral terminal (1080) and physically soldered to an exterior surface of the side wall.

9. The heater (210) according to claim 8, wherein the terminals are electrically coupled in soldered electrical connection to other electrical components to the film printed heater (1000).

10. The heater (210) according to claim 9, wherein the heating element (930) comprises a heater temperature sensor coupled to at least some of the resistive bands (1010).

11. The heater (210) according to any one of claims 7 to 10, wherein the gate (1060) is located above the live terminal (1065), and the live terminal (1065) is located above the first neutral terminal (1020).

12. A thermal immersion circulator (100) comprising:
a housing (110) defining a cavity;
a heater (210) comprising a heating element (930), wherein at least a portion of the heating element (930) is located within the cavity of the housing (110);
a coupling assembly (250) securing the heater (210) within the housing (110); anda seal (260) isolating the coupling assembly (250) from direct contact with the heater (210), wherein the heater (210) is configured according to any one of claims 1 to 11.

13. The thermal immersion circulator (100) according to claim 12, further comprising a motor (220) driving a flow of the fluid from the fluid inlet to the fluid outlet (920), wherein the motor (220) is mounted within the housing (110) using a front motor mount (640) and a rear motor mount (650), the rear motor mount (650) comprising an extended portion (655) counterbalancing reactive forces of the seal (260) located adjacent the fluid outlet (920) to substantially prevent dislocation of the motor (220) with respect to the housing (110).

## Patentansprüche

1. Heizvorrichtung (210) für einen thermischen Tauchzirkulator (100), wobei die Heizvorrichtung (210) umfasst:
eine rohrförmige Seitenwand mit einer Längsachse, einen Fluideinlass, der mit einem Fluidauslass (920) in Verbindung steht, und einen dazwischen angeordneten Fluidheizabschnitt;
mindestens eine Dichtung (680, 685), die benachbart zu dem Auslass (920) angeordnet ist; sowie
ein Heizelement (930), das physikalisch mit der rohrförmigen Seitenwand gekoppelt und zumindest teilweise um den Fluidheizabschnitt gewickelt ist, wobei das Heizelement (930) eine Vielzahl von Widerstandsbändern (1010) umfasst, die an der rohrförmigen Seitenwand angeordnet sind,
**dadurch gekennzeichnet, dass**
ein erster Abschnitt eines Widerstandsbandes aus der Vielzahl von Widerstandsbändern (1010) neben dem Fluidauslass (920) in Längsrichtung weiter von dem Fluidauslass (920) beabstandet ist als der Längsabstand zwischen dem Auslass (920) und einem gegenüberliegenden zweiten Abschnitt des an der Seitenwand angeordneten Widerstandsbandes, um die Übertragung der von dem Widerstandsband erzeugten Wärme auf die Dichtung (680, 685) zu verringern, während das Fluid im Wesentlichen entlang einer Längsausdehnung des Fluidheizabschnitts erwärmt wird.

2. Heizvorrichtung (210) nach Anspruch 1, bei der die Vielzahl der Widerstandsbänder (1010) eine von dem Fluidauslass (920) beabstandete Heizfläche bildet, um die Übertragung der von der Vielzahl von Widerstandsbändern (1010) erzeugten Wärme zu verringern, während sie im Wesentlichen den gesamten Fluidheizabschnitt einnehmen.

3. Heizvorrichtung (210) nach Anspruch 1 oder 2, bei der ein an den Fluideinlass angrenzendes Widerstandsband um mindestens einen vorbestimmten Abstand von einem mit der Heizvorrichtung (210) gekoppelten Fluidbadtemperatursensor beabstandet ist, um die Beeinträchtigung der Temperaturmessung des in den Fluideinlass eintretenden Fluids durch den Temperatursensor durch die während der Tätigkeit des Heizelements (930) erzeugte Wärme zu verringern.

4. Heizvorrichtung (210) nach einem der Ansprüche 1 bis 3, bei der ein Abstand zwischen einem oberen Endabschnitt der Heizfläche und dem Fluideinlass entlang des Umfangs der rohrförmigen Seitenwand variiert, um im Wesentlichen den gesamten Fluidheizabschnitt einzunehmen, während er von der um den Fluidauslass (920) angeordneten Dichtung (680, 685) beabstandet ist.

5. Heizvorrichtung (210) nach einem der Ansprüche 1 bis 4, bei der die Vielzahl von Widerstandsbändern (1010) mindestens zwei Spalten von Widerstandsbändern umfasst, wobei jede Spalte mindestens ein unteres Widerstandsband benachbart zu dem Fluideinlass und mindestens ein oberes Widerstandsband benachbart zu dem Fluidauslass (920) umfasst.

6. Heizvorrichtung (210) nach Anspruch 5, bei der ein Abstand zwischen jedem oberen Widerstandsband und einem oberen Endabschnitt der Heizvorrichtung (210) entlang der mindestens zwei Spalten variiert.

7. Heizvorrichtung (210) nach einem der Ansprüche 1 bis 6, bei der das Heizelement (930) eine folienbedruckte Heizvorrichtung (1000) ist, wobei die folienbedruckte Heizvorrichtung (1000) eine Vielzahl von leitenden Bahnen umfasst, die auf der elektrisch isolierenden Basisschicht ausgebildet sind, wobei die Vielzahl von leitenden Bahnen umfasst:
einen ersten Neutralleiter (1030), der ein erstes Ende jedes Widerstandsbandes miteinander und mit einem ersten Neutralanschluss (1020) elektrisch koppelt; und
einen zweiten Neutralleiter (1090), der ein zweites Ende jedes Widerstandsbandes miteinander und mit einem zweiten Neutralanschluss (1080) elektrisch koppelt;
wobei die folienbedruckte Heizvorrichtung (1000) weiterhin umfasst:
einen Spannungsanschluss (1065), für den der zweite Neutralleiter (1090) und der zweite Neutralanschluss (1080) als Rückleitung und Rückanschluss dienen;
ein Gate (1060), das an den Spannungsanschluss (1065) angrenzt und von diesem elektrisch getrennt ist.

8. Heizvorrichtung (210) nach Anspruch 7, weiterhin umfassend eine mechanisch gecrimpte Thermosicherung (675) und einen Sicherungshalter (670), wobei ein oberes Ende der Thermosicherung (675) elektrisch mit dem zweiten Neutralleiter (1090) sowie mit einer Leiterplatte gekoppelt ist, die die Vorrichtung zum Erwärmen von Fluid steuert, und ein unteres Ende der Thermosicherung (675) elektrisch mit dem zweiten Neutralanschluss (1080) gekoppelt und physikalisch an eine Außenfläche der Seitenwand gelötet ist.

9. Heizvorrichtung (210) nach Anspruch 8, bei der die Anschlüsse über eine gelötete elektrische Verbindung mit anderen elektrischen Bauteilen der folienbedruckten Heizvorrichtung (1000) elektrisch gekoppelt sind.

10. Heizvorrichtung (210) nach Anspruch 9, bei der das Heizelement (930) einen Heiztemperatursensor umfasst, der mit mindestens einigen der Widerstandsbänder (1010) gekoppelt ist.

11. Heizvorrichtung (210) nach einem der Ansprüche 7 bis 10, bei der sich das Gate (1060) über dem Spannungsanschluss (1065) befindet und sich der Spannungsanschluss (1065) über dem ersten Neutralanschluss (1020) befindet.

12. Thermischer Tauchzirkulator (100), umfassend:
ein Gehäuse (110), das einen Hohlraum definiert;
eine Heizvorrichtung (210) mit einem Heizelement (930), wobei sich zumindest ein Abschnitt des Heizelements (930) innerhalb des Hohlraums des Gehäuses (110) befindet;
eine Kupplungsbaugruppe (250), die die Heizvorrichtung (210) innerhalb des Gehäuses (110) sichert; und
eine Dichtung (260), die die Kupplungsbaugruppe (250) vor direktem Kontakt mit der Heizvorrichtung (210) schützt, wobei die Heizvorrichtung (210) gemäß einem der Ansprüche 1 bis 11 eingerichtet ist.

13. Thermischer Tauchzirkulator (100) nach Anspruch 12, weiterhin umfassend einen Motor (220), der einen Fluidstrom von dem Fluideinlass zu dem Fluidauslass (920) antreibt, wobei der Motor (220) innerhalb des Gehäuses (110) unter Verwendung einer vorderen Motorhalterung (640) und einer hinteren Motorhalterung (650) angebracht ist und die hintere Motorhalterung (650) einen verlängerten Abschnitt (655) umfasst, der den Reaktionskräften der Dichtung (260), die sich neben dem Fluidauslass (920) befindet, entgegenwirkt, um eine Verschiebung des Motors (220) gegenüber dem Gehäuse (110) im Wesentlichen zu verhindern.

## Revendications

1. Radiateur (210) pour dispositif de circulateur à immersion thermique (100), le radiateur (210) comprenant:
une paroi latérale tubulaire présentant un axe longitudinal, une entrée de fluide en communication avec une sortie de fluide (920), et une partie chauffage du fluide située entre celles-ci;
au moins un joint d'étanchéité (680, 685) situé à proximité de la sortie (920); et
un élément chauffant (930) physiquement couplé à la paroi latérale tubulaire et enroulé au moins partiellement autour de la partie de chauffage du fluide, l'élément chauffant (930) comprenant une pluralité de bandes résistives (1010) disposées sur la paroi latérale tubulaire,
**caractérisé en ce que**
une première partie d'une bande résistive parmi la pluralité de bandes résistives (1010) adjacente à la sortie de fluide (920) est espacée longitudinalement à une plus grande distance de la sortie de fluide (920) par rapport à un espacement longitudinal entre la sortie (920) et une seconde partie opposée de la bande résistive disposée sur la paroi latérale, de manière à réduire le transfert de chaleur générée par la bande résistive vers le joint d'étanchéité (680, 685) tout en chauffant le fluide plus ou moins sur toute la longueur de la partie de chauffage du fluide.

2. Radiateur (210) selon la revendication 1, dans lequel la pluralité de bandes résistives (1010) forme une surface de chauffage espacée de la sortie de fluide (920) de manière à réduire le transfert de chaleur générée par la pluralité de bandes résistives (1010) tout en occupant plus ou moins l'intégralité de la partie de chauffage du fluide.

3. Radiateur (210) selon l'une des revendications 1 ou 2, dans lequel une bande résistive adjacente à l'entrée de fluide est espacée d'au moins une distance prédéterminée d'un capteur de température du bain de fluide couplé au dispositif de chauffage (210) de manière à réduire l'interférence de la chaleur générée pendant le fonctionnement de l'élément chauffant (930) sur la mesure de la température du fluide entrant dans l'entrée de fluide par le capteur de température.

4. Radiateur (210) selon l'une quelconque des revendications 1 à 3, dans lequel la distance entre une partie d'extrémité supérieure de la surface de chauffage et l'entrée de fluide varie le long de la circonférence de la paroi latérale tubulaire pour occuper sensiblement la totalité de la partie de chauffage du fluide tout en étant espacée du joint d'étanchéité (680, 685) situé autour de la sortie de fluide (920).

5. Radiateur (210) selon l'une quelconque des revendications 1 à 4, dans lequel la pluralité de bandes résistives (1010) comprend au moins deux colonnes de bandes résistives, chaque colonne comprenant au moins une bande résistive inférieure adjacente à l'entrée de fluide et au moins une bande résistive supérieure adjacente à la sortie de fluide (920).

6. Radiateur (210) selon la revendication 5, dans lequel la distance entre chaque bande résistive supérieure et une partie d'extrémité supérieure du dispositif de chauffage (210) varie le long desdites au moins deux colonnes.

7. Radiateur (210) selon l'une quelconque des revendications 1 à 6, dans lequel l'élément chauffant (930) est un film chauffant imprimé (1000), le film chauffant imprimé (1000) comprenant une pluralité de voies conductrices formées sur la couche de base électriquement isolante, la pluralité de voies conductrices comprenant:
un premier circuit neutre (1030) qui relie électriquement une première extrémité de chaque bande résistive entre elles et à une première borne neutre (1020); et
un second circuit neutre (1090) qui relie électriquement les secondes extrémités de chaque bande résistive entre elles et à une seconde borne neutre (1080);
le film chauffant imprimé (1000) comprend en outre:
une borne sous tension (1065) pour laquelle le second circuit neutre (1090) et la seconde borne neutre (1080) servent de circuit de retour et de borne de retour;
une grille (1060) adjacente à la borne sous tension (1065) et séparée électriquement de celle-ci.

8. Radiateur (210) selon la revendication 7, comprenant en outre un fusible thermique (675) serti selon un procédé mécanique et un porte-fusible (670), dans lequel une extrémité supérieure du fusible thermique (675) est couplée électriquement au second circuit neutre (1090) et à un circuit imprimé commandant le dispositif de chauffage de fluide, et une extrémité inférieure du fusible thermique (675) est couplée électriquement à la seconde borne neutre (1080) et soudée physiquement à une surface extérieure de la paroi latérale.

9. Radiateur (210) selon la revendication 8, dans lequel les bornes sont reliées électriquement, par une connexion soudée, à d'autres composants électriques du film chauffant imprimé (1000).

10. Radiateur (210) selon la revendication 9, dans lequel l'élément chauffant (930) comprend un capteur de température du dispositif de chauffage couplé à au moins certaines des bandes résistives (1010).

11. Radiateur (210) selon l'une quelconque des revendications 7 à 10, dans lequel la grille (1060) est située au-dessus de la borne sous tension (1065), et la borne sous tension (1065) est située au-dessus de la première borne neutre (1020).

12. Dispositif de circulateur à immersion thermique (100) comprenant:
un boîtier (110) définissant une cavité;
un dispositif de chauffage (210) comprenant un élément chauffant (930), dans lequel au moins une partie de l'élément chauffant (930) est située à l'intérieur de la cavité du boîtier (110);
un ensemble de couplage (250) fixant l'élément chauffant (210) à l'intérieur du boîtier (110); et
un joint d'étanchéité (260) isolant l'ensemble de couplage (250) de tout contact direct avec l'élément chauffant (210), dans lequel l'élément chauffant (210) est configuré selon l'une quelconque des revendications 1 à 11.

13. Dispositif de circulateur à immersion thermique (100) selon la revendication 12, comprenant en outre un moteur (220) entraînant un écoulement du fluide depuis l'entrée de fluide vers la sortie de fluide (920), dans lequel le moteur (220) est monté à l'intérieur du boîtier (110) à l'aide d'un support de moteur avant (640) et d'un support de moteur arrière (650), le support arrière de moteur (650) comprenant une partie prolongée (655) contrebalançant les forces réactives du joint d'étanchéité (260) situé à proximité de la sortie de fluide (920) afin d'empêcher sensiblement tout déplacement du moteur (220) par rapport au boîtier (110).
